# EUROPEAN PATENT APPLICATION

(11) **EP 4 682 994 A1**
(43) Date of publication of application: **21.01.2026**
(21) Application number: 23957286.0
(22) Date of filing: 02.11.2023
(51) Int. Cl.: H01M 4/62, C09J 133/02, C09J 133/20, C08F 220/02, C08F 220/20, H01M 10/0525

(54) **POLYMER, PREPARATION METHOD, NEGATIVE ELECTRODE SHEET, SECONDARY BATTERY, AND ELECTRIC DEVICE**

(71) Applicant: Contemporary Amperex Technology Co., Limited, Ningde, Fujian 352100 (CN)
(72) Inventor: ZHANG, Wenmeng, Ningde, Fujian 352100 (CN); CHEN, Shuhua, Ningde, Fujian 352100 (CN); LIU, Huihui, Ningde, Fujian 352100 (CN); CHEN, Linhui, Ningde, Fujian 352100 (CN)
(74) Representative: Ziebig Hengelhaupt Intellectual Property Attorneys Patentanwaltskanzlei PartGmbB
(86) International application number: PCT/CN2023/129447
(87) International publication number: WO 2025/091417

(57) **Abstract**

The present application provides a polymer, a preparation method, a negative electrode plate, a secondary battery, and a power consuming apparatus. The polymer contains a structural unit derived from an unsaturated carboxylic acid monomer, a structural unit derived from an unsaturated cyano monomer, and a structural unit derived from a flexible monomer. The glass transition temperature of the flexible monomer is -60°C to 0°C, and optionally -55°C to -15°C. The polymer can reduce warping of the electrode plate and widen a processing window of the electrode plate.

## Description

### TECHNICAL FIELD

The present application relates to the technical field of secondary batteries, and in particular, to a polymer, a preparation method, a negative electrode plate, a secondary battery, and a power consuming apparatus.

### BACKGROUND

In recent years, secondary batteries have been widely used in energy storage power systems such as water power stations, thermal power stations, wind power stations, and solar power stations, and also widely applied to various fields such as electric tools, electric bicycles, electric motorcycles, electric vehicles, military equipment, and aerospace.

A non-fluoropolymer binder containing an unsaturated carboxylic acid monomer has advantages such as low costs, strong bonding force, and good water solubility, and is a common negative electrode binder in a secondary battery. However, the application scenarios thereof are greatly limited due to disadvantages such as a narrow processing window and difficulty in satisfying use requirements of high-performance active materials. Therefore, the existing polymer binder still remains to be improved.

### SUMMARY

The present application is made in view of the foregoing problem, and an objective thereof is to provide a polymer. The polymer can improve a warping phenomenon of an electrode plate in a preparation process to widen a processing window of the electrode plate.

To achieve the foregoing objective, the present application provides a polymer. The polymer contains a structural unit derived from an unsaturated carboxylic acid monomer, a structural unit derived from an unsaturated cyano monomer, and a structural unit derived from a flexible monomer. A glass transition temperature of the flexible monomer is -60°C to 0°C, and optionally -55°C to -15°C.

The containing of the structural unit derived from the unsaturated carboxylic acid monomer in the polymer can improve the water solubility of the polymer, and provide an ion transmission channel for lithium ions, which is conductive to improving the dynamic performance of a battery. The containing of the structural unit derived from the unsaturated cyano monomer in the polymer can improve the bonding strength between the polymer and an active material as well as a current collector. The containing of the structural unit derived from the flexible monomer in the polymer can effectively lower the glass transition temperature of the polymer, improve the flexibility of the polymer, and reduce phenomena of uneven contraction and stress concentration that are generated in a slurry drying process of the polymer, thereby relieving the warping degree of the electrode plate, widening the processing window of the electrode plate, and improving the processability and quality stability of the electrode plate.

In any one embodiment, the flexible monomer includes a structure shown in Formula I: 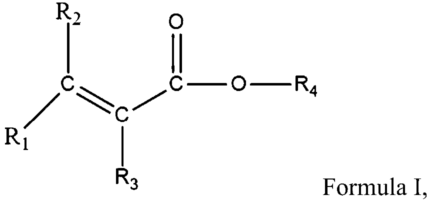 where R₁, R₂, and R₃ each independently includes hydrogen or substituted or unsubstituted C₁₋₅ alkyl, and R₄ includes one or more of C₁₋₅ hydroxyalkyl, C₁₋₅ alkyl, and C₁₋₅ alkoxy.

In any one embodiment, the unsaturated carboxylic acid monomer includes a structure shown in Formula II, and the unsaturated cyano monomer includes a structure shown in Formula III: 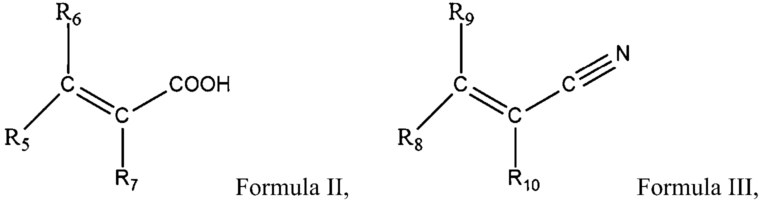 where R₅, R₆, R₇, R₈, R₉, and R₁₀ each independently includes hydrogen or substituted or unsubstituted C₁₋₅ alkyl.

In any one embodiment, the polymer further contains a structural unit derived from an unsaturated amide monomer, and the unsaturated amide monomer includes a structure shown in Formula IV: 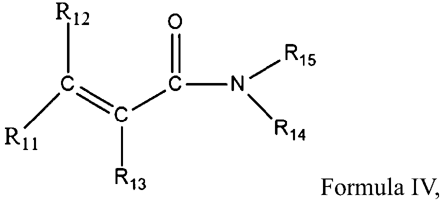 where R₁₁, R₁₂, R₁₃, R₁₄, and R₁₅ each independently includes hydrogen or substituted or unsubstituted C₁₋₅ alkyl.

When the polymer contains the structural unit derived from the unsaturated amide monomer, an amide group in the polymer disassociates after being dissolved in water, so that the polymer has a negative charge; and different chains in the polymer have a static repulsive force, so that the polymer is extended in a solution and the chains can be intertwined, thereby improving the viscosity of the negative electrode slurry, improving the stability of the negative electrode slurry, and further optimizing the processing performance of the electrode plate.

In any one embodiment, the flexible monomer includes one or more of hydroxyethyl acrylate, 4-hydroxybutyl acrylate, hydroxybutyl acrylate, ethyl acrylate, and n-butyl acrylate.

The foregoing flexible monomer not only has a low glass transition temperature, but also has better compatibility with the structural unit derived from the unsaturated carboxylic acid monomer and the structural unit derived from the unsaturated cyano monomer, so as to effectively lower the glass transition temperature of the polymer. In addition, the foregoing flexible monomer can effectively reduce the surface tension of the slurry by using groups such as an ester group, a hydroxyl group, and an alkoxyl group, thereby further reducing warping of the electrode plate, and improving the processability and quality stability of the electrode plate.

In any one embodiment, the flexible monomer includes at least two of hydroxyethyl acrylate, 4-hydroxybutyl acrylate, hydroxybutyl acrylate, ethyl acrylate, and n-butyl acrylate.

By means of mutual cooperation of two different types of flexible monomers, the flexibility of the polymer can be further improved, and a processing window and application scenarios of the polymer can be widened while the bonding performance of the polymer is taken into consideration, and the rebound of the electrode plate can be prevented.

In any one embodiment, the unsaturated carboxylic acid monomer includes one or more of acrylic acid, methacrylic acid, ethylacrylic acid, and butenoic acid; the unsaturated cyano monomer includes one or more of acrylonitrile, butenenitrile, methacrylonitrile, and ethylacrylonitrile; and the unsaturated amide monomer includes one or more of acrylamide, methylacrylamide, N,N-dimethylacrylamide, and N-methylacrylamide.

In any one embodiment, based on a total mole number of the structural units in the polymer, a mole proportion of the structural unit derived from the flexible monomer is 5% to 50%, and optionally 20% to 35%.

The polymer having a mole proportion of the structural unit of the flexible monomer of 5% to 50% has a relatively low glass transition temperature, which can relieve the warping phenomenon of the electrode plate and improve the processing performance of the electrode plate. The polymer having a mole proportion of the structural unit of the flexible monomer of 20% to 35% can take both flexibility and bonding performance of the polymer into consideration, which can not only reduce risks of edge cracking during cold pressing and wrinkle-induced release at fully charged interfaces that occur during processing of the electrode plate, but also improve the production efficiency and yield. In addition, the electrode plate can maintain a high bonding force and a low rebound rate, thereby comprehensively improving the cycle stability of the battery.

In any one embodiment, based on the total mole number of the structural units in the polymer, a mole proportion of the structural unit derived from the unsaturated carboxylic acid monomer is 10% to 60%, and optionally 30% to 50%; and/or a mole proportion of the structural unit derived from the unsaturated cyano monomer is 10% to 60%, and optionally 15% to 45%; and/or a mole proportion of the structural unit derived from the unsaturated amide monomer is 0% to 30%, and optionally 5% to 20%.

The polymer having the structural units within the foregoing content ranges can improve the flexibility, and the bonding force and solubility are both considered.

In any one embodiment, the glass transition temperature of the polymer is 40°C to 105°C, and optionally 40°C to 90°C.

When the glass transition temperature of the polymer is 40°C to 105°C, the polymer has good flexibility, and the electrode plate has a low warping degree and good processing performance. The polymer having the glass transition temperature of 40°C to 90°C can further reduce the occurrence of a phenomenon of edge cracking during edge rolling of the battery, further expand the processing window of the electrode plate, and improve the processing performance of the electrode plate.

In any one embodiment, a weight average molecular weight of the polymer is 0.5 million to 2 million, and optionally 0.8 million to 1.5 million.

When the weight average molecular weight of the polymer is 0.5 million to 2 million, a viscosity of an aqueous solution of the polymer at certain solid content is within an appropriate range, the electrode plate has good processing performance and bonding performance, and the battery has good cycle stability.

In any one embodiment, the viscosity of the aqueous solution having a solid content of 6wt% and prepared by dissolution of the polymer in deionized water is 8000 MPa·s to 30000 MPa·s, and optionally 10000 MPa·s to 20000 MPa·s.

When the viscosity of the aqueous solution having a solid content of 6wt% and prepared by dissolution of the polymer in deionized water is within the foregoing range, the slurry has stability and processability, the electrode plate has excellent processability and bonding performance, and the battery has good cycle stability.

In any one embodiment, the polymer includes at least one of an acrylic acid-acrylonitrile-acrylamide-hydroxyethyl acrylate copolymer, an acrylic acid-acrylonitrile-hydroxyethyl acrylate copolymer, a methacrylic acid-acrylonitrile-acrylamide-hydroxyethyl acrylate copolymer, an acrylic acid-methacrylonitrile-acrylamide-hydroxyethyl acrylate copolymer, an acrylic acid-acrylonitrile-methacrylamide-hydroxyethyl acrylate copolymer, an acrylic acid-acrylonitrile-acrylamide-hydroxybutyl acrylate copolymer, an acrylic acid-acrylonitrile-acrylamide-hydroxypropyl acrylate copolymer, an acrylic acid-acrylonitrile-acrylamide-hydroxyethyl acrylate-hydroxybutyl acrylate copolymer, and an acrylic acid-acrylonitrile-hydroxyethyl acrylate-hydroxybutyl acrylate copolymer.

A second aspect of the present application provides a preparation method of a polymer. Under a polymerizable condition, a polymer is prepared by polymerizing a raw material including a flexible monomer, an unsaturated carboxylic acid monomer, and an unsaturated cyano monomer. A glass transition temperature of the flexible monomer is -60°C to -0°C, and optionally -55°C to -15°C.

In any one embodiment, the preparation method specifically includes: polymerizing an initiator, the flexible monomer shown in Formula I, the unsaturated carboxylic acid monomer shown in Formula II, the unsaturated cyano monomer shown in Formula III, and an unsaturated amide monomer shown in Formula IV in an aqueous solvent, 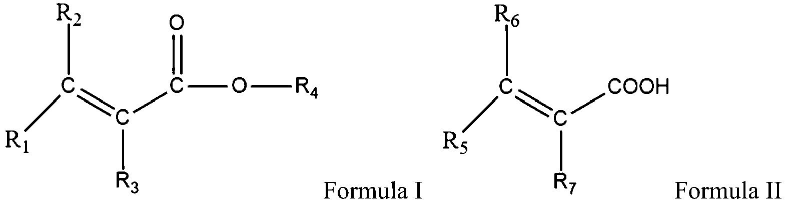 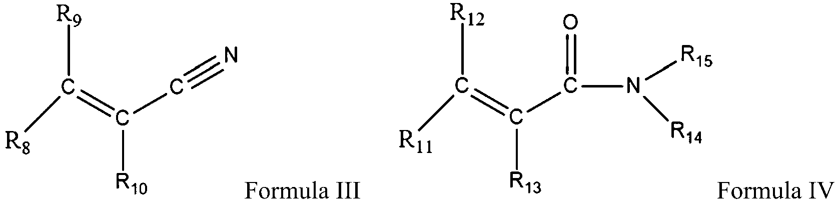 where R₁, R₂, R₃, R₅, R₆, R₇, R₈, R₉, R₁₀, R₁₁, R₁₂, R₁₃, R₁₄, and R₁₅ each independently includes hydrogen or substituted or unsubstituted C₁₋₅ alkyl, and R₄ includes one or more of C₁₋₅ hydroxyalkyl, C₁₋₅ alkyl, and C₁₋₅ alkoxy. When the polymer is prepared by a solution polymerization method, the reaction temperature can be well controlled, which is beneficial to preparing a polymer with a moderate molecular weight. In addition, the polymer synthesized by the solution polymerization method has good water solubility.

In any one embodiment, the initiator includes an inorganic peroxide initiator, and the inorganic peroxide initiator includes any one of ammonium persulfate, potassium persulfate, and sodium persulfate.

In any one embodiment, a mass of the initiator is 0.01% to 0.1%, and optionally 0.03% to 0.08%, of a total mass of the flexible monomer, the unsaturated carboxylic acid monomer, the unsaturated cyano monomer, and the unsaturated amide monomer.

When the amount of the initiator is within the foregoing range, a speed of the polymerization is moderated, heat of the system is uniform, a gel effect is weakened, and the polymerization of the polymer is uniform, thereby obtaining a polymer having a weight average molecular weight within an appropriate range.

In any one embodiment, the polymerization satisfies at least one of the following conditions:
(1) a reaction environment of the polymerization is a non-water soluble gas atmosphere;
(2) a reaction temperature of the polymerization is 60°C to 100°C;
(3) a stirring speed of the polymerization is 200 rpm to 800 rpm; and
(4) a reaction time of the polymerization is 8 h to 12 h.

When the temperature of the polymerization is 60°C to 100°C, the reaction activity of free radicals in the solution is within an appropriate range, and rates of a chain transfer reaction and a chain propagation reaction are moderate, so that the molecular weight of the polymer is within an appropriate range.

When the reaction time of the polymerization is 8 h to 12 h, a conversion rate of the monomers is within an appropriate range, and the polymer has an appropriate weight average molecular weight.

In some embodiments, the non-water soluble gas is selected from one or more of nitrogen, oxygen, hydrogen, and methane.

A third aspect of the present application provides a negative electrode plate. The negative electrode plate includes a negative electrode film layer. The negative electrode film layer includes a binder. The binder includes the polymer in any of the embodiments or a polymer prepared by the preparation method in any of the embodiments.

In any one embodiment, a mass proportion of the binder is 0.5% to 3%, and optionally 1% to 2%, based on a total mass of the negative electrode film layer.

The polymer containing the derived from the unsaturated carboxylic acid monomer in the prior art may cause phenomena of severe warping and edge cracking during rolling of the electrode plate at an addition amount of 1%, which is difficult to meet production requirements. The polymer provided in the embodiments of the present application still enables the electrode plate to have good processing performance at an addition amount of 3%. Therefore, the cycle stability of the secondary battery can be further improved by increasing the amount of the binder.

In any one embodiment, a warping height of the negative electrode plate is 0 mm to 20 mm.

The polymer has a low glass transition temperature and high flexibility, and can effectively improve phenomena of uneven contraction and stress concentration that are generated during a drying process of the polymer, and relieve the warping phenomenon of the electrode plate.

In any one embodiment, the negative electrode plate includes a negative electrode active material, and the negative electrode active material includes one or more of artificial graphite, natural graphite, soft carbon, hard carbon, and a silicon-based material.

The silicon-based material has a high capacity, and can greatly improve the energy density of the battery. However, during a cyclic process, the expansion rate of the silicon-based material is large, which easily causes uneven stress of the electrode plate, and causes phenomena such as wrinkling of the electrode plate. Because the stress at a corner position of an inner ring of a battery cell is more severe, phenomena such as peeling, bubbling, and splitting may occur, or even a film may be flaked. The polymer provided in the embodiments of the present application may further be applicable to a silicon-based system to reduce uneven stress distribution of the electrode plate, and effectively improve peeling, bubbling, and splitting of the electrode plate in a fully charged state, thereby improving the cycle stability of the battery.

In any one embodiment, a compaction density of the negative electrode plate is 1.45 g/cm³ to 1.95 g/cm³.

The negative electrode plate having a high compaction density is more prone to brittle fracture in a cyclic process, and even a crack occurs in a hot pressing process after the negative electrode plate is wound. The polymer provided in the embodiments of the present application may further be applicable to an electrode plate with high compaction density, so as to improve the flexibility of the electrode plate with high compaction density, and reduce the probability of cracking and brittle fracture of the electrode plate during production and use.

A fourth aspect of the present application provides a secondary battery, which includes the negative electrode plate according to the third aspect of the present application.

A fifth aspect of the present application provides a power consuming apparatus, which includes the secondary battery according to the fourth aspect of the present application.

### BRIEF DESCRIPTION OF THE DRAWINGS

FIG. 1 is a schematic diagram of a secondary battery according to an embodiment of the present application;
FIG. 2 is an exploded view of the secondary battery according to an embodiment of the present application shown in FIG. 1;
FIG. 3 is a schematic diagram of a battery module according to an embodiment of the present application;
FIG. 4 is a schematic diagram of a battery pack according to an embodiment of the present application;
FIG. 5 is an exploded view of the battery pack according to an embodiment of the present application shown in FIG. 4; and
FIG. 6 is a schematic diagram of a power consuming apparatus using a secondary battery as a power source according to an embodiment of the present application.

### Description of reference numerals:

1. battery pack; 2. upper box; 3. lower box; 4. battery module; 5. secondary battery; 51. case; 52. electrode assembly; and 53. cover plate.

### DETAILED DESCRIPTION

Hereinafter, embodiments of a polymer, a preparation method, a negative electrode plate, a secondary battery, and a power consuming apparatus of the present application are described in detail and specifically disclosed with reference to the drawings as appropriate. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the drawings and subsequent descriptions are provided for those skilled in the art to fully understand the present application, and are not intended to limit the subject matter recited in the claims.

The "ranges" disclosed in the present application are defined in the form of lower and upper limits. A given range is defined by selecting a lower limit and an upper limit, and the selected lower limit and upper limit define the boundaries of the particular range. The range defined in this way may include or may not include end values, and may be arbitrarily combined, that is, any lower limit can be combined with any upper limit to form a range. For example, if the ranges 60 to 120 and 80 to 110 are listed for a specific parameter, it is understood that the ranges 60 to 110 and 80 to 120 are also expected. In addition, if the listed minimum range values are 1 and 2 and if the listed maximum range values are 3, 4, and 5, the following ranges can all be expected: 1 to 3, 1 to 4, 1 to 5, 2 to 3, 2 to 4, and 2 to 5. In the present application, unless otherwise specified, the numerical range "a to b" represents an abbreviated representation of any combination of real numbers between a and b, where a and b are both real numbers. For example, the numerical range "0 to 5" indicates that all real numbers between "0 to 5" have been listed herein, and "0 to 5" is only an abbreviated representation of combinations of these numbers. In addition, when a parameter is expressed as an integer greater than or equal to 2, it is equivalent to disclosing that the parameter is, for example, an integer of 2, 3, 4, 5, 6, 7, 8, 9, 10, 11, 12, and the like.

Unless otherwise specified, all the embodiments and optional embodiments of the present application may be combined with each other to form new technical solutions.

Unless otherwise specified, all technical features and optional technical features of the present application may be combined with each other to form new technical solutions.

Unless otherwise specified, all the steps in the present application may be performed in the order described or in a random order, and preferably in the order described. For example, the method includes steps (a) and (b), meaning that the method may include steps (a) and (b) performed sequentially, or may include steps (b) and (a) performed sequentially. For example, reference to "the method may further include step (c)" indicates that step (c) may be added to the method in any order. For example, the method may include steps (a), (b) and (c), or steps (a), (c) and (b), or steps (c), (a) and (b), or the like.

Unless otherwise specified, "include" and "comprise" mentioned in the present application may be open-ended, or may be closed-ended. For example, the terms "include" and "comprise" may indicate that other components not listed may further be included or comprised, or only listed components may be included or comprised.

Unless otherwise specified, in the present application, the term "or" is inclusive. For example, the phrase "A or B" means "A, B, or both A and B". More specifically, any one of the following conditions satisfies the condition "A or B": A is true (or existing) and B is false (or not existing); A is false (or not existing) and B is true (or existing); or both A and B are true (or existing).

Non-fluoropolymers containing unsaturated carboxylic acid monomers have advantages such as low costs, strong bonding force, and good water solubility. In recent years, application of the non-fluoro-polymers containing unsaturated carboxylic acid monomer in secondary batteries have been widely researched. To satisfy the requirement for the bonding force of the electrode plate, in such a type of binder, a large quantity of unsaturated carboxylic acid monomers and unsaturated monomers containing cyano groups are generally used as copolymerization units, and the bonding performance of the electrode plate is improved by means of interaction between carboxyl and cyano groups and current collectors. However, practices indicate that the slurry including such a type of polymer easily causes a relatively large degree of warping of the electrode plate during coating and drying processes, affecting subsequent rolling manufacturing of the electrode plate and quality stability of the electrode plate.

### [Polymer]

Based on this, the present application provides a polymer. The polymer contains a structural unit derived from an unsaturated carboxylic acid monomer, a structural unit derived from an unsaturated cyano monomer, and a structural unit derived from a flexible monomer. A glass transition temperature of the flexible monomer is -60°C to 0°C, and optionally -55°C to -15°C.

Herein, on the one hand, the term "polymer" includes a collection of chemically homogeneous macromolecules that are prepared by polymerization but are different in terms of polymerization degree, mole mass, and chain length. On the other hand, the term also includes a derivative of such a macromolecule collection formed by polymerization, that is, a chemically homogeneous or chemically heterogeneous compound that may be obtained by the reaction, such as addition or substitution, of a functional group in the foregoing macromolecules.

Herein, the term "unsaturated carboxylic acid monomer" refers to an unsaturated monomer with molecules containing -COOH groups.

Herein, the term "unsaturated cyano monomer" refers to an unsaturated monomer with molecules containing -CN groups.

Herein, the term "flexible monomer" refers to a monomer whose homopolymer has a low glass transition temperature and can improve polymer brittleness and enhance polymer flexibility.

Herein, the term "glass transition temperature" refers to a temperature at which a polymer transitions from a glassy state to a highly elastic state, which is referred to as Tg for short. The glass transition temperature of the flexible monomer is usually obtained by measuring the glass transition temperature of a flexible monomer homopolymer, or by consulting tool books.

In some embodiments, the glass transition temperature of the flexible monomer is -60°C, -55°C, -50°C, -45°C, -40°C, -35°C, -30°C, -25°C, -20°C, -15°C, -10°C, -5°C, 0°C, or any value between these values.

The containing of the structural unit derived from the unsaturated carboxylic acid monomer in the polymer can improve the water solubility of the polymer, and provide an ion transmission channel for lithium ions, which is conductive to improving the dynamic performance of a battery. The containing of the structural unit derived from the unsaturated cyano monomer in the polymer can improve the bonding strength between the polymer and an active material as well as a current collector. The containing of the structural unit derived from the flexible monomer in the polymer can effectively lower the glass transition temperature of the polymer, improve the flexibility of the polymer, and reduce phenomena of uneven contraction and stress concentration that are generated in a slurry drying process of the polymer, thereby relieving the warping degree of the electrode plate, widening the processing window of the electrode plate, and improving the processability and quality stability of the electrode plate.

In some embodiments, the flexible monomer includes a structure shown in Formula I: 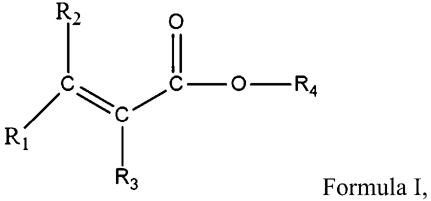 where R₁, R₂, and R₃ each independently includes hydrogen or substituted or unsubstituted C₁₋₅ alkyl, and R₄ includes one or more of C₁₋₅ hydroxyalkyl, C₁₋₅ alkyl, and C₁₋₅ alkoxy.

Herein, the term "substituted" means that at least one hydrogen atom of the compound or a chemical moiety is replaced by a substituent of another chemical moiety, where the substituent is independently selected from: hydroxyl, sulfydryl, amino, cyano, nitro, aldehyde, halogen atom, vinyl, alkynyl, aryl, heteroaryl, C₁₋₆ alkyl, and C₁₋₆ alkoxy.

Herein, the term "C₁₋₅ hydroxyalkyl" refers to a group composed of alkyl and hydroxyl, and the group does not have unsaturated other moieties having one to five carbon atoms and attached to molecules through single bonds, including but not limited to hydroxymethyl, hydroxyethyl, hydroxypropyl, and 4-hydroxybutyl.

Herein, the term "C₁₋₅ alkyl" refers to a linear or branched hydrocarbon chain group only composed of carbon and hydrogen atoms, and the group has other moieties having one to five carbon atoms and attached to molecules through single bonds, including but not limited to methyl, ethyl, n-propyl, isopropyl, n-butyl, isobutyl, tert-butyl, forked butyl, and pentyl.

Herein, the term "C₁₋₅ alkoxy" refers to a group composed of alkyl and oxygen atoms, and the group has other moieties having one to five carbon atoms and attached to molecules through single bonds. Common groups include methoxy (CH₃O-), ethoxy (C₂H₅O-), propoxy (C₃H₇O-), and the like.

In some embodiments, R₁, R₂, and R₃ each independently includes hydrogen or C₁₋₅ alkyl, and R₄ includes C₁₋₄ hydroxyalkyl.

In some embodiments, the flexible monomer includes one or more of hydroxyethyl acrylate, hydroxypropyl acrylate, 4-hydroxybutyl acrylate, ethyl acrylate, and n-butyl acrylate.

In some embodiments, the flexible monomer includes one or more of hydroxyethyl acrylate, hydroxypropyl acrylate, and 4-hydroxybutyl acrylate.

The foregoing flexible monomer not only has a low glass transition temperature, but also has better compatibility with the structural unit derived from the unsaturated carboxylic acid monomer and the structural unit derived from the unsaturated cyano monomer, so as to effectively lower the glass transition temperature of the polymer. In addition, the foregoing flexible monomer can effectively reduce the surface tension of the slurry by using groups such as an ester group, a hydroxyl group, and an alkoxyl group, thereby further reducing warping of the electrode plate, and improving the processability and quality stability of the electrode plate.

In some embodiments, the flexible monomer includes at least two of hydroxyethyl acrylate, hydroxypropyl acrylate, 4-hydroxybutyl acrylate, ethyl acrylate, and n-butyl acrylate.

In some embodiments, the flexible monomer includes at least two of hydroxyethyl acrylate, hydroxypropyl acrylate, and 4-hydroxybutyl acrylate.

By means of mutual cooperation of two different types of flexible monomers, the flexibility of the polymer can be further improved, and a processing window and application scenarios of the polymer can be widened while the bonding performance of the polymer is taken into consideration, and the rebound of the electrode plate can be prevented.

In some embodiments, the unsaturated carboxylic acid monomer includes a structure shown in Formula II, and the unsaturated cyano monomer includes a structure shown in Formula III: 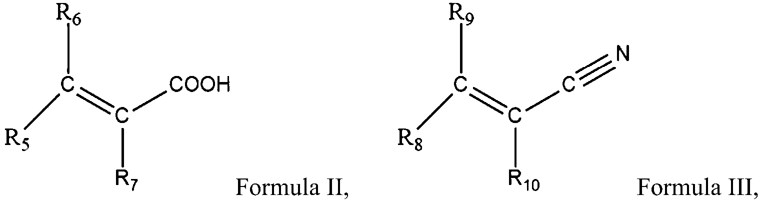 where R₅, R₆, R₇, R₈, R₉, and R₁₀ each independently includes hydrogen or substituted or unsubstituted C₁₋₅ alkyl.

In some embodiments, the unsaturated carboxylic acid monomer includes one or more of acrylic acid, methacrylic acid, ethylacrylic acid, and butenoic acid.

In some embodiments, the unsaturated cyano monomer includes one or more of acrylonitrile, butenenitrile, methacrylonitrile, and ethylacrylonitrile. In some embodiments, the polymer further contains a structural unit derived from an unsaturated amide monomer, and the unsaturated amide monomer includes a structure shown in Formula IV: 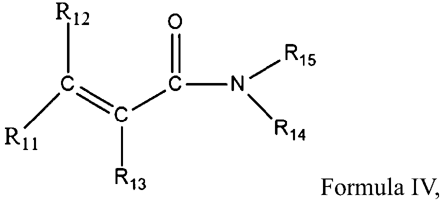 where R₁₁, R₁₂, R₁₃, R₁₄, and R₁₅ each independently includes hydrogen or substituted or unsubstituted C₁₋₅ alkyl.

Herein, the term "unsaturated amide monomer" refers to an unsaturated monomer with molecules containing -CO-N-.

When the polymer contains the structural unit derived from the unsaturated amide monomer, an amide group in the polymer disassociates after being dissolved in water, so that the polymer has a negative charge; and different chains in the polymer have a static repulsive force, so that the polymer is extended in a solution and the chains can be intertwined, thereby improving the viscosity of the negative electrode slurry, improving the stability of the negative electrode slurry, and further optimizing the processing performance of the electrode plate.

In some embodiments, the unsaturated amide monomer includes one or more of acrylamide, methylacrylamide, N,N-dimethylacrylamide, and N-methylacrylamide.

In some embodiments, based on a total mole number of the structural units in the polymer, a mole proportion of the structural unit derived from the flexible monomer is 5% to 50%, and optionally 20% to 35%.

In some embodiments, based on the total mole number of the structural units in the polymer, the mole proportion of the structural unit derived from the flexible monomer is 5%, 10%, 15%, 20%, 25%, 30%, 35%, 40%, 45%, 50%, or any value between these values.

The polymer having a mole proportion of the structural unit of the flexible monomer of 5% to 50% has a relatively low glass transition temperature, which can relieve the warping phenomenon of the electrode plate and improve the processing performance of the electrode plate. The polymer having a mole proportion of the structural unit of the flexible monomer of 20% to 35% can take both flexibility and bonding performance of the polymer into consideration, which can not only reduce risks of edge cracking during cold pressing and wrinkle-induced release at fully charged interfaces that occur during processing of the electrode plate, but also improve the production efficiency and yield. In addition, the electrode plate can maintain a high bonding force and a low rebound rate, thereby comprehensively improving the cycle stability of the battery.

In some embodiments, based on the total mole number of the structural units in the polymer, a mole proportion of the structural unit derived from the unsaturated carboxylic acid monomer is 10% to 60%, and optionally 30% to 50%; and/or a mole proportion of the structural unit derived from the unsaturated cyano monomer is 10% to 60%, and optionally 15% to 45%; and/or a mole proportion of the structural unit derived from the unsaturated amide monomer is 0% to 30%, and optionally 5% to 20%.

In some embodiments, based on the total mole number of the structural units in the polymer, the mole proportion of the structural unit derived from the unsaturated carboxylic acid monomer is 10%, 15%, 20%, 25%, 30%, 35%, 40%, 45%, 50%, 55%, 60%, or any value between these values.

In some embodiments, based on the total mole number of the structural units in the polymer, the mole proportion of the structural unit derived from the unsaturated cyano monomer is 10%, 15%, 20%, 25%, 30%, 35%, 40%, 45%, 50%, 55%, 60%, or any value between these values.

In some embodiments, based on the total mole number of the structural units in the polymer, the mole proportion of the structural unit derived from the unsaturated amide monomer is 0%, 5%, 10%, 15%, 20%, 25%, 30%, or any value between these values.

The polymer having the structural units within the foregoing content ranges can improve the flexibility, and the bonding force and solubility are both considered. In some embodiments, the glass transition temperature of the polymer is 40°C to 105°C, and optionally 40°C to 90°C.

In the present application, a method known in the art may be used for testing the glass transition temperature of the polymer. For example, a differential scanning calorimeter (model Q1000) from the TA Company is used for testing the glass transition temperature. 6 to 9 g of polymer sample is taken, is heated from room temperature to 200°C at a heating rate of 10°C/min, and then is kept at 200°C for 3 h to eliminate a heat history. After the temperature is reduced, the temperature is increased again from room temperature to 200°C at a heating rate of 10°C/min. A differential scanning calorimetry curve obtained through this scanning is analyzed to determine the glass transition temperature of the polymer, where the unit is °C.

In some embodiments, the glass transition temperature of the polymer is 40°C, 50°C, 60°C, 70°C, 80°C, 90°C, 105°C, or any value between these values.

When the glass transition temperature of the polymer is within the foregoing range, the polymer has good flexibility, and the electrode plate has a low warping degree and good processing performance. The polymer having the glass transition temperature of 40°C to 90°C can further reduce the occurrence of a phenomenon of edge cracking during edge rolling of the battery, further expand the processing window of the electrode plate, and improve the processing performance of the electrode plate.

In some embodiments, a weight average molecular weight of the polymer is 0.5 million to 2 million, and optionally 0.8 million to 1.5 million.

Herein, the term "weight average molecular weight" refers to the sum of products of weight fractions of molecules with different molecular weights and corresponding molecular weights thereof in a polymer.

In the present application, a method known in the art may be used for testing the weight average molecular weight of the polymer. For example, the weight average molecular weight of the polymer may be tested by a gel chromatography, such as a Waters 2695 Isocratic HPLC type gel chromatograph (a differential refraction detector 2141). In some embodiments, a test method is to use a polystyrene solution sample with a mass fraction of 3.0% as a reference and select a matched chromatographic column (oily: Styragel HT5DMF7.8*300 mm+Styragel HT4). A 3.0% polymer gel solution is prepared by using a purified N-methylpyrrolidone (NMP) solvent, and the prepared solution is allowed to stand for one day for later use. During testing, first, a syringe is used for sucking tetrahydrofuran, washing is performed, and the process is repeated several times. Then, 5 ml of experimental solution is sucked, air in the syringe is removed, and a needle tip is wiped dry. Finally, the sample solution is slowly injected into a sampling port. After the displayed number is stable, data is obtained, and the weight average molecular weight is read.

In some embodiments, the weight average molecular weight of the polymer is 0.5 million, 0.7 million, 0.8 million, 0.9 million, 1 million, 1.2 million, 1.4 million, 1.5 million, 1.6 million, 1.8 million, 2 million, or any value between there values.

When the weight average molecular weight of the polymer is within the foregoing range, a viscosity of an aqueous solution of the polymer at certain solid content is within an appropriate range, the electrode plate has good processing performance and bonding performance, and the battery has good cycle stability.

In some embodiments, the viscosity of the aqueous solution having a solid content of 6wt% and prepared by dissolution of the polymer in deionized water is 8000 MPa·s to 30000 MPa·s, and optionally 10000 MPa·s to 20000 MPa·s.

In the present application, the viscosity of the polymer solution may be tested by using a method known in the art. For example, 24 g of polymer and 376 g of water are respectively weighted by using a 500 ml beaker to prepare an aqueous solution having a solid content of 6%, and the aqueous solution is dispersed by means of stirring by using a LICHEN high-speed grinder, where the rotation speed is 800 r/min, and the stirring time is 120 min; and then, ultrasonic shaking is performed for 30 min to remove air bubbles. An NDJ-5S rotary viscometer from LICHEN Technology is used, a No.64 rotor is selected and inserted into the aqueous solution crossing a scale line, the viscosity is tested at 12 r/min, and the viscosity data is read after 6 min.

In some embodiments, the viscosity of the aqueous solution having a solid content of 6wt% and prepared by dissolution of the polymer in deionized water is 8000 MPa·s, 10000 MPa·s, 15000 MPa·s, 20000 MPa·s, 25000 MPa·s, 30000 MPa·s, or any value between these values.

When the viscosity of the aqueous solution having a solid content of 6wt% and prepared by dissolution of the polymer in deionized water is within the foregoing range, the slurry has stability and processability, the electrode plate has excellent processability and bonding performance, and the battery has good cycle stability.

In some embodiments, the polymer includes at least one of an acrylic acid-acrylonitrile-acrylamide-hydroxyethyl acrylate copolymer, an acrylic acid-acrylonitrile-hydroxyethyl acrylate copolymer, a methacrylic acid-acrylonitrile-acrylamide-hydroxyethyl acrylate copolymer, an acrylic acid-methacrylonitrile-acrylamide-hydroxyethyl acrylate copolymer, an acrylic acid-acrylonitrile-methacrylamide-hydroxyethyl acrylate copolymer, an acrylic acid-acrylonitrile-acrylamide-hydroxybutyl acrylate copolymer, an acrylic acid-acrylonitrile-acrylamide-hydroxypropyl acrylate copolymer, an acrylic acid-acrylonitrile-acrylamide-hydroxyethyl acrylate-hydroxybutyl acrylate copolymer, and an acrylic acid-acrylonitrile-hydroxyethyl acrylate-hydroxybutyl acrylate copolymer.

A second aspect of the present application provides a preparation method of a polymer. Under a polymerizable condition, a polymer is prepared by polymerizing a raw material including a flexible monomer, an unsaturated carboxylic acid monomer, and an unsaturated cyano monomer. A glass transition temperature of the flexible monomer is -60°C to -0°C, and optionally -55°C to -15°C.

In some embodiments, the preparation method specifically includes: polymerize an initiator, the flexible monomer shown in Formula I, the unsaturated carboxylic acid monomer shown in Formula II, the unsaturated cyano monomer shown in Formula III, and an unsaturated amide monomer shown in Formula IV in an aqueous solvent, 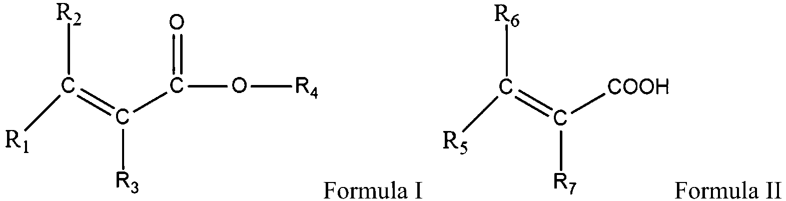 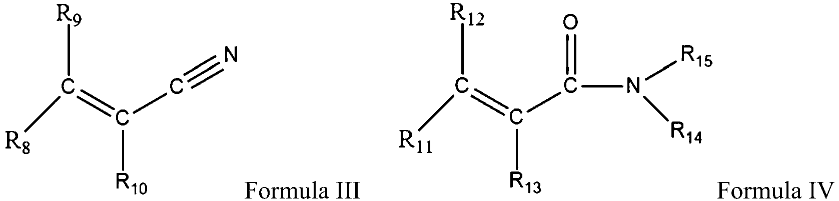 where R₁, R₂, R₃, R₅, R₆, R₇, R₈, R₉, R₁₀, R₁₁, R₁₂, R₁₃, R₁₄, and R₁₅ each independently includes hydrogen or substituted or unsubstituted C₁₋₅ alkyl, and R₄ includes one or more of C₁₋₅ hydroxyalkyl, C₁₋₅ alkyl, and C₁₋₅ alkoxy.

When the polymer is prepared by a solution polymerization method, the reaction temperature can be well controlled, which is beneficial to preparing a polymer with a moderate molecular weight. In addition, the polymer synthesized by the solution polymerization method has good water solubility.

In some embodiments, the initiator includes an inorganic peroxide initiator, and the inorganic peroxide initiator includes any one of ammonium persulfate, potassium persulfate, and sodium persulfate.

In some embodiments, a mass of the initiator is 0.01% to 0.1%, and optionally 0.03% to 0.08%, of a total mass of the flexible monomer, the unsaturated carboxylic acid monomer, the unsaturated cyano monomer, and the unsaturated amide monomer.

In some embodiments, the mass of the initiator is 0.01%, 0.03%, 0.05%, 0.08%, 0.1%, or any value between these values of the total mass of the flexible monomer, the unsaturated carboxylic acid monomer, the unsaturated cyano monomer, and the unsaturated amide monomer.

When the amount of the initiator is within the foregoing range, a speed of the polymerization is moderated, heat of the system is uniform, a gel effect is weakened, and the polymerization of the polymer is uniform, thereby obtaining a polymer having a weight average molecular weight within an appropriate range.

In some embodiments, the polymerization satisfies at least one of the following conditions:
(1) a reaction environment of the polymerization is a non-water soluble gas atmosphere;
(2) a reaction temperature of the polymerization is 60°C to 100°C;
(3) a stirring speed of the polymerization is 200 rpm to 800 rpm; and
(4) a reaction time of the polymerization is 8 h to 12 h.

The non-water soluble gas refers to gas with a gas solubility of less than 0.1 L. The gas solubility refers to the volume of gas that reaches a saturated state when dissolved in 1 L of water at the pressure of gas of 1.013×10⁵ Pa at 20°C.

In some embodiments, the non-water soluble gas is selected from one or more of nitrogen, oxygen, hydrogen, and methane.

In some embodiments, the reaction temperature of the polymerization is 60°C, 70°C, 80°C, 90°C, 100°C, or any value between these values.

When the temperature of the polymerization is within the foregoing range, the reaction activity of free radicals in the solution is within an appropriate range, and rates of a chain transfer reaction and a chain propagation reaction are moderate, so that the weight average molecular weight of the polymer is within an appropriate range.

In some embodiments, the stirring speed of the polymerization is 200 rpm, 300 rpm, 400 rpm, 500 rpm, 600 rpm, 700 rpm, 800 rpm, or any value between these values.

In some embodiments, the reaction time of the polymerization is 8 h, 9 h, 10 h, 11 h, 12 h, or any value between these values.

When the reaction time of the polymerization is within the foregoing range, a conversion rate of the monomers is within an appropriate range, and the polymer has an appropriate weight average molecular weight.

### [Negative electrode plate]

In some embodiments, the negative electrode plate includes a negative electrode film layer. The negative electrode film layer includes a binder. The binder includes the polymer in any of the embodiments or a polymer prepared by the preparation method in any of the embodiments.

Herein, the term "binder" refers to a chemical compound, a polymer, or a mixture that forms a colloidal solution or a colloidal dispersion liquid in a dispersion medium.

In some embodiments, the dispersion medium of the binder is an aqueous solvent, such as water. That is, the binder is dissolved in the aqueous solvent.

In some embodiments, a mass proportion of the binder is 0.5% to 3%, and optionally 1% to 2%, based on a total mass of the negative electrode film layer.

In some embodiments, the mass proportion of the binder is 0.5%, 1%, 1.5%, 2%, 2.5%, 3%, or any value between these values based on the total mass of the negative electrode film layer.

The polymer containing the derived from the unsaturated carboxylic acid monomer in the prior art may cause phenomena of severe warping and edge cracking during rolling of the electrode plate at an addition amount of 1%, which is difficult to meet production requirements. The polymer provided in the embodiments of the present application still enables the electrode plate to have good processing performance at an addition amount of 3%. Therefore, the cycle stability of the secondary battery can be further improved by increasing the amount of the binder.

In some embodiments, a warping height of the negative electrode plate is 0 mm to 20 mm.

In the present application, the warping height of the negative electrode plate may be tested by using a method known in the art. For example, a negative electrode slurry is coated on a negative electrode current collector, and baked at 100°C for 1 min to remove most of water. Then, the negative electrode current collector is cut into 10 negative electrode plates having a size of 4 cm × 4 cm. Then, the cut negative electrode plates are placed on a heating plate whose temperature is stable at 120°C, and are kept for 1 min. Heights by which four corners of each negative electrode plate are tilted to the plane of the heating plate are measured by using a graduated scale, and are respectively denoted as h1, h2, h3, and h4. An average value of h1, h2, h3, and h4 corresponding to each negative electrode plate is calculated, and is denoted as H. The average values H corresponding to the 10 negative electrode plates are further averaged to serve as the warping height of the negative electrode plate.

In some embodiments, the warping height of the negative electrode plate is 0 mm, 2 mm, 4 mm, 6 mm, 8 mm, 10 mm, 12 mm, 14 mm, 16 mm, 18 mm, 20 mm, or any value between these values.

The polymer has a low glass transition temperature and high flexibility, and can effectively improve phenomena of uneven contraction and stress concentration that are generated during a drying process of the polymer, and relieve the warping phenomenon of the electrode plate.

In some embodiments, the negative electrode film layer includes a negative electrode active material, and the negative electrode active material includes one or more of artificial graphite, natural graphite, soft carbon, hard carbon, and a silicon-based material.

In some embodiments, the silicon-based material includes at least one of elemental silicon, nano silicon, a silicon-oxygen compound, a silicon-carbon composite, a silicon-nitrogen composite, and a silicon alloy.

The silicon-based material has a high capacity, and can greatly improve the energy density of the battery. However, during a cyclic process, the expansion rate of the silicon-based material is large, which easily causes uneven stress of the electrode plate, and causes phenomena such as wrinkling of the electrode plate. Because the stress at a corner position of an inner ring of a battery cell is more severe, phenomena such as peeling, bubbling, and splitting may occur, or even a film may be flaked. The polymer provided in the embodiments of the present application may further be applicable to a silicon-based system to reduce uneven stress distribution of the electrode plate and effectively improve peeling, bubbling, and splitting of the electrode plate in a fully charged state while maintaining a low rebound rate of the electrode plate, thereby improving the cycle stability of the battery.

In some embodiments, the negative electrode film layer includes a negative electrode active material and a binder. The negative electrode active material includes a silicon-based material. The binder includes a polymer. The polymer contains a structural unit derived from an unsaturated carboxylic acid monomer, a structural unit derived from an unsaturated cyano monomer, and a structural unit derived from a flexible monomer. The flexible monomer includes at least two of hydroxyethyl acrylate, hydroxypropyl acrylate, and 4-hydroxybutyl acrylate. The glass transition temperature of the polymer is 40°C to 75°C.

In some embodiments, a compaction density of the negative electrode plate is 1.45 g/cm³, 1.55 g/cm³, 1.60 g/cm³, 1.65 g/cm³, 1.75 g/cm³, 1.85 g/cm³, 1.95 g/cm³, or any value between these values.

The negative electrode plate having a high compaction density is more prone to brittle fracture in a cyclic process, and even a crack occurs in a hot pressing process after the negative electrode plate is wound. The polymer provided in the embodiments of the present application may further be applicable to an electrode plate with high compaction density, so as to improve the flexibility of the electrode plate with high compaction density and reduce the probability of cracking and brittle fracture of the electrode plate during production and use while maintaining a low rebound rate of the electrode plate.

In some embodiments, the compaction density of the negative electrode plate is 1.60 g/cm³ to 1.95 g/cm³. The negative electrode film layer includes a binder. The binder includes a polymer. The polymer contains a structural unit derived from an unsaturated carboxylic acid monomer, a structural unit derived from an unsaturated cyano monomer, a structural unit derived from an unsaturated amide monomer, and a structural unit derived from a flexible monomer. The flexible monomer includes at least two of hydroxyethyl acrylate, hydroxypropyl acrylate, and 4-hydroxybutyl acrylate. The glass transition temperature of the polymer is 40°C to 90°C.

In some embodiments, the negative electrode current collector may use a metal foil or a composite current collector. For example, a copper foil may be used as the metal foil. The composite current collector may include a high molecular material substrate layer and a metal layer formed on at least one surface of the high molecular material substrate. The composite current collector may be formed by forming a metal material (copper, copper alloy, nickel, nickel alloy, titanium, titanium alloy, silver, silver alloy, and the like) on the high molecular material substrate (such as a substrate of polypropylene (PP), polyethylene terephthalate (PET), polybutylene terephthalate (PBT), polystyrene (PS), or polyethylene (PE)).

In some embodiments, the negative electrode film layer further optionally includes a conductive agent. The conductive agent may be selected from at least one of superconducting carbon, acetylene black, carbon black, Ketjen black, carbon dot, carbon nanotube, graphene, and carbon nanofiber.

In some embodiments, the negative electrode film layer further optionally includes other adjuvants, for example, a thickener (such as sodium carboxymethyl cellulose (CMC-Na)).

In some embodiments, the negative electrode plate may be prepared by the following method: disperse the foregoing components for preparing the negative electrode plate, for example, the negative electrode active material, the conductive agent, the binder, and any other components in a solvent (for example, deionized water) to form negative electrode slurry; and coat the negative electrode current collector with the negative electrode slurry, and perform working procedures such as drying and cold pressing to obtain the negative electrode plate.

### [Positive electrode plate]

The positive electrode plate includes a positive electrode current collector and a positive electrode film layer arranged on at least one surface of the positive electrode current collector. The positive electrode film layer includes a positive electrode active material.

As an example, the positive electrode current collector has two opposite surfaces in a thickness direction of the positive electrode current collector, and
the positive electrode film layer is disposed on either or both of the two opposite surfaces of the positive electrode current collector.

In some embodiments, the positive electrode current collector may use a metal foil or a composite current collector. For example, an aluminum foil may be used as the metal foil. The composite current collector may include a high molecular material substrate layer and a metal layer formed on at least one surface of the high molecular material substrate layer. The composite current collector may be formed by forming a metal material (such as aluminum, aluminum alloy, nickel, nickel alloy, titanium, titanium alloy, silver, silver alloy, and the like) on the high molecular material substrate (such as a substrate of polypropylene (PP), polyethylene terephthalate (PET), polybutylene terephthalate (PBT), polystyrene (PS), or polyethylene (PE)).

In some embodiments, the positive electrode active material may use a positive electrode active material used for batteries well known in the art. As an example, the positive electrode active material may include at least one of the following materials: a lithium-containing phosphate having an olivine structure, a lithium transition metal oxide, and respective modified compounds thereof. However, the present application is not limited to such materials, and other conventional materials that may be used as positive electrode active materials for batteries may also be used. Only one or a combination of two or more of these positive electrode active materials may be used. Examples of the lithium transition metal oxide may include, but are not limited to, at least one of a lithium-cobalt oxide (such as LiCoO₂), a lithium-nickel oxide (such as LiNiO₂), a lithium-manganese oxide (such as LiMnO₂ or LiMn₂O₄), a lithium-nickel-cobalt oxide, a lithium-manganese-cobalt oxide, a lithium-nickel-manganese oxide, a lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), a lithium-nickel-cobalt-aluminum oxide (such as LiNi_{0.85}Co_{0.15}Al_{0.05}O₂), and modified compounds thereof. Examples of the lithium-containing phosphate having an olivine structure may include, but are not limited to, at least one of lithium iron phosphate (e.g., LiFePO₄ (also abbreviated as LFP)), a composite material of lithium iron phosphate and carbon, lithium manganese phosphate (e.g., LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. As an example, the binder may include at least one of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and fluorine-containing acrylic resin.

In some embodiments, the positive electrode film layer further optionally includes a conductive agent. As an example, the conductive agent may include at least one of superconducting carbon, acetylene black, carbon black, Ketjen black, carbon dot, carbon nanotube, graphene, and carbon nanofiber.

In some embodiments, the positive electrode plate may be prepared by the following method: disperse the foregoing components for preparing the positive electrode plate, for example, the positive electrode active material, the conductive agent, the binder, and any other components in a solvent (for example, N-methylpyrrolidone) to form positive electrode slurry; and coat a positive electrode current collector with the positive electrode slurry, and perform working procedures such as drying and cold pressing to obtain the positive electrode plate.

### [Electrolyte]

The electrolyte plays a role in conducting ions between the positive electrode plate and the negative electrode plate. The type of the electrolyte is not specifically limited in the present application, and it may be selected according to demands. For example, the electrolyte may be in a liquid state, a gel state, or an all-solid state.

In some embodiments, the electrolyte uses an electrolyte solution. The electrolyte solution includes an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluorobis(oxalato)phosphate, and lithium tetrafluoro(oxalato)phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some embodiments, the electrolyte solution may further optionally include an additive. For example, the additive may include a negative electrode film-forming additive and a positive electrode film-forming additive, and may further include additives that can improve certain performance of the battery, for example, an additive that improves the overcharging performance of the battery and an additive that improves the high-temperature or low-temperature performance of the battery.

### [Separator]

In some embodiments, the secondary battery further includes a separator. The type of the separator is not particularly limited in the present application, and any well-known separator of a porous structure having good chemical stability and mechanical stability may be selected.

In some embodiments, a material of the separator may be selected from at least one of glass fiber, non-woven fabric, polyethylene, polypropylene, and polyvinylidene fluoride. The separator may be a single-layer film or a multilayer composite film, which is not particularly limited. When the separator is a multilayer composite film, materials of the layers may be the same or different, which is not particularly limited.

In some embodiments, the positive electrode plate, the negative electrode plate, and the separator may be made into an electrode assembly by a winding process or a laminating process.

In some embodiments, the secondary battery may include an outer packaging. The outer packaging may be configured to encapsulate the above electrode assembly and electrolyte.

In some embodiments, the outer packaging of the secondary battery may be a hard shell, such as a hard plastic shell, an aluminum shell, or a steel shell. The outer packaging of the secondary battery may also be a soft packaging, such as a bag-type soft packaging. A material of the soft packaging may be plastic, and examples of the plastic may include polypropylene, polybutylene terephthalate, polybutylene succinate, and the like.

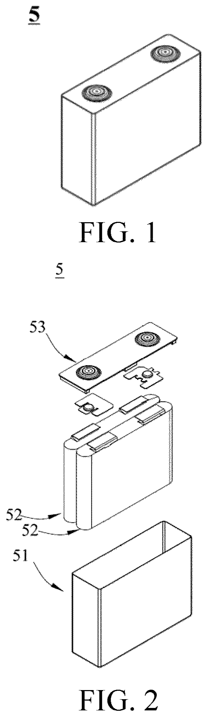

A shape of the secondary battery is not particularly limited in the present application, and the secondary battery may be in a cylinder shape, a square shape, or any other shapes. For example, FIG. 1 shows a secondary battery 5 of a square structure as an example. Optionally, the secondary battery is a lithium-ion battery or a sodium-ion battery.

In some embodiments, referring to FIG. 2, the outer packaging may include a case 51 and a cover plate 53. The case 51 may include a bottom plate and a side plate connected to the bottom plate, and the bottom plate and the side plate are enclosed to form an accommodating cavity. The case 51 has an opening in communication with the accommodating cavity, and the cover plate 53 may cover the opening to close the accommodating cavity. The positive electrode plate, the negative electrode plate, and the separator may be formed into an electrode assembly 52 by a winding process or a laminating process. The electrode assembly 52 is encapsulated in the accommodating cavity. The electrode assembly 52 is impregnated with the electrolyte solution. One or more electrode assemblies 52 may be contained in the secondary battery 5, and may be selected by those skilled in the art according to specific actual demands.

In some embodiments, the secondary batteries may be assembled into a battery module. One or more secondary batteries may be contained in the battery module, and the specific number may be selected by those skilled in the art according to the application and capacity of the battery module.

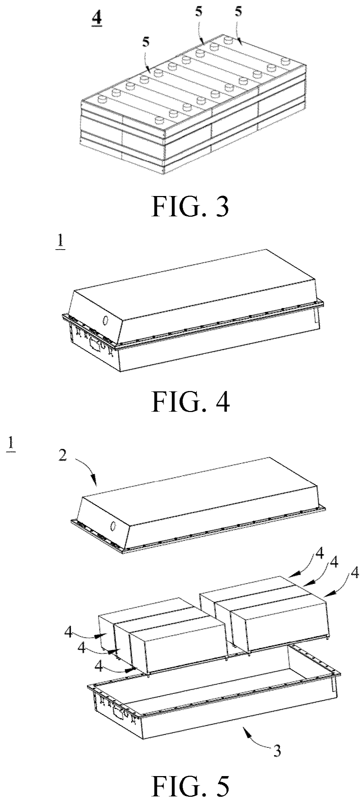

FIG. 3 shows a battery module 4 as an example. Referring to FIG. 3, in the battery module 4, a plurality of secondary batteries 5 may be sequentially arranged along a length direction of the battery module 4. Of course, the plurality of secondary batteries 5 may also be arranged in any other ways. The plurality of secondary batteries 5 may further be fixed by fasteners.

Optionally, the battery module 4 may further include a shell having an accommodating space, and the plurality of secondary batteries 5 are accommodated in the accommodating space.

In some embodiments, the foregoing battery modules may further be assembled into a battery pack. One or more battery modules may be contained in the battery pack, and the specific number may be selected by those skilled in the art according to the application and capacity of the battery pack.

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box 2 and a lower box 3. The upper box 2 may cover the lower box 3 to form a closed space for accommodating the battery modules 4. The plurality of battery modules 4 may be arranged in the battery box in any manner.

In addition, the present application further provides a power consuming apparatus. The power consuming apparatus includes at least one of the secondary battery, the battery module and the battery pack provided in the present application. The secondary battery, the battery module, or the battery pack may be used as a power source for the power consuming apparatus, and may also be used as an energy storage unit for the power consuming apparatus. The power consuming apparatus may include, but is not limited to, a mobile device (such as a mobile phone, and a laptop), an electric vehicle (such as an all-electric vehicle, a hybrid electric vehicle, a plug-in hybrid electric vehicle, an electric bicycle, an electric scooter, an electric golf cart, and an electric truck), an electric train, a ship, a satellite, an energy storage system, and the like.

The secondary battery, the battery module, or the battery pack may be selected according to use requirements of the power consuming apparatus.

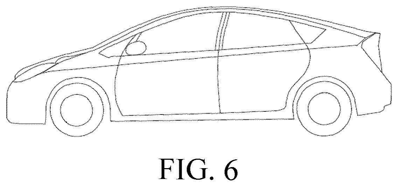

FIG. 6 shows a power consuming apparatus as an example. The power consuming apparatus is an all-electric vehicle, a hybrid electric vehicle, a plug-in hybrid electric vehicle, or the like. To meet the requirements of the power consuming apparatus on high power and high energy density of the secondary battery, the battery pack or the battery module may be used.

The apparatus used as another example may be a mobile phone, a tablet computer, a laptop, and the like. The apparatus is generally required to be light and thin, and the secondary battery may be used as a power source.

### Examples

### Preparation method

Examples of the present application will be described below. The examples described below are illustrative and only used for explaining the present application, and cannot be construed as limiting the present application. If no specific techniques or conditions are specified in the examples, the techniques or conditions described in the literatures in the art or in accordance with the product specification shall be followed. The reagents or instruments used without manufacturer indicated are all commercially available conventional products.

### I. Preparation method

### Example 1

### 1) Preparation of polymer

Hydroxyethyl acrylate (HEA), acrylic acid, acrylonitrile, and acrylamide were added to a three-neck flask equipped with a reflux condenser and a stirrer in a mole ratio of 35: 30: 25: 10, deionized water and an ammonium persulfate initiator accounting for 0.05% of the total mass of the monomers were added; under a nitrogen atmosphere and at a constant temperature of 80°C, the reaction was performed at a rotation speed of 500 rpm for 8 h; and after the reaction, an acrylic acid-acrylonitrile-acrylamide-hydroxyethyl acrylate copolymer was obtained. The weight average molecular weight of the copolymer was 0.8 million, and the viscosity of an aqueous solution having a solid content of 6wt% of the copolymer was 8000 mpa.s to 30000 mpa.s.

### 2) Preparation of positive electrode plate

A positive electrode active material LiNi_{0.6}Co_{0.2}Mn_{0.2}O₂(NCM622), a carbon black conductive agent, and a polyvinylidene fluoride (PVDF) binder were added to N-methylpyrrolidone in a weight ratio of 92:4:4, and stirred and mixed evenly to obtain a positive electrode slurry. The positive electrode slurry was evenly coated on two surfaces of a positive electrode current collector which was an aluminum foil, and then drying was performed to obtain a film layer. Then, cold pressing and slitting were performed to obtain a positive electrode plate. The binder was PVDF having a weight average molecular weight of 0.7 million, which was purchased from Arkema France Limited Company.

### 3) Preparation of negative electrode plate

A negative electrode active material common graphite, a carbon black conductive agent, a styrene-butadiene rubber (SBR) binder, a polymer prepared in Example 1, and a hydroxymethyl cellulose sodium (CMC-Na) thickener were dissolved in a solvent of deionized water in a weight ratio of 96.5: 0.5: 1: 1: 1, stirred at 1800 r/min and 25°C for 3 h and mixed evenly to prepare a negative electrode slurry. The negative electrode slurry was evenly coated on two surfaces of a negative electrode current collector which was a copper foil once or multiple times, and then drying, cold pressing, and slitting were performed to obtain a negative electrode plate with the compaction density of 1.5 g/cm³.

### 4) Separator

A polypropylene film was used as a separator.

### 5) Preparation of electrolyte solution

In a glove box in an argon atmosphere (H₂O<0.1 ppm, O₂<0.1 ppm), organic solvents ethylene carbonate (EC) and ethyl methyl carbonate (EMC) were mixed evenly in a volume ratio of 3/7, and an LiPF₆ lithium salt was dissolved in the organic solvents and stirred evenly to prepare a 1 M LiPF₆ electrolyte solution.

### 6) Preparation of battery

The prepared positive electrode plate, separator, and negative electrode plate were laminated sequentially, where the separator was located between the positive electrode plate and the negative electrode plate for separation, and then, a bare battery cell was obtained by winding. The bare battery cell was welded with tabs, filled into an aluminum shell, and baked at 80°C to remove water. Then, the electrolyte solution was immediately injected, and an opening was sealed to obtain an uncharged battery. The uncharged battery was then subjected to standing, hot and cold pressing, formation, shaping, capacity test, and other working procedures in sequence to obtain a lithium-ion battery product of Example 1.

The preparation method of batteries in Examples 2 to 13 was similar to the preparation method of the battery in Example 1, except that the mole proportions of the acrylic acid, acrylonitrile, acrylamide, and hydroxyethyl acrylate monomers were adjusted, and the amount of the initiator was correspondingly changed. Specific parameters are shown in Table 1.

The preparation method of batteries in Examples 14 to 16 was similar to the preparation method of the battery in Example 1, except that the mass fraction of the polymer was adjusted, and based on the total mass of the negative electrode film layer, the mass of the negative electrode active material was correspondingly changed. Specific parameters are shown in Table 1.

The preparation method of batteries in Examples 17 to 20 was similar to the preparation method of the battery in Example 11, except that the amount of the initiator was respectively adjusted to 0.1%, 0.05%, 0.03%, and 0.03% of the total mass of monomers, and the reaction time was respectively 8 h, 10 h, 10 h, and 12 h, thereby adjusting the molecular weight of the polymer. Specific parameters are shown in Table 1.

The preparation method of a battery in Example 21 was similar to the preparation method of the battery in Example 1, except that the hydroxyethyl acrylate monomer was replaced with a 4-hydroxybutyl acrylate (4-HBA) monomer, and the mole ratio remains unchanged. Specific parameters are shown in Table 1.

The preparation method of a battery in Example 22 was similar to the preparation method of the battery in Example 1, except that the hydroxyethyl acrylic acid monomer was replaced with a hydroxypropyl acrylate monomer, of which the mole proportion was 25%, and the mole proportion of the acrylic monomer was correspondingly changed. Specific parameters are shown in Table 1.

The preparation method of a battery in Example 23 was similar to the preparation method of the battery in Example 1, except that the acrylic acid monomer was replaced with a methacrylic acid monomer. Specific parameters are shown in Table 1.

The preparation method of a battery in Example 24 was similar to the preparation method of the battery in Example 1, except that the acrylonitrile monomer was replaced with a methacrylonitrile monomer, and the mole proportion remains unchanged. Specific parameters are shown in Table 1.

The preparation method of a battery in Example 25 was similar to the preparation method of the battery in Example 1, except that the acrylamide monomer was replaced with a methacrylamide monomer, and the mole proportion remains unchanged. Specific parameters are shown in Table 1.

### Example 26

### 1) Preparation of polymer

Hydroxyethyl acrylate, 4-hydroxybutyl acrylate, acrylic acid, acrylonitrile, and acrylamide were added to a three-neck flask equipped with a reflux condenser and a stirrer in a mole ratio of 5: 15: 35: 40: 5, deionized water and an ammonium persulfate initiator accounting for 0.05% of the total mass of the monomers were added; under a nitrogen atmosphere and at a constant temperature of 80°C, the reaction was performed at a rotation speed of 500 rpm for 8 h; and after the reaction, an acrylic acid-acrylonitrile-acrylamide-hydroxyethyl acrylate-hydroxybutyl acrylate copolymer was obtained. The weight average molecular weight of the copolymer was 0.8 million.

### 2) Preparation of positive electrode plate

A positive electrode active material LiNi_{0.6}Co_{0.2}Mn_{0.2}O₂(NCM622), a carbon black conductive agent, and a polyvinylidene fluoride (PVDF) binder were added to N-methylpyrrolidone in a weight ratio of 92:4:4, and stirred and mixed evenly to obtain a positive electrode slurry. The positive electrode slurry was evenly coated on two surfaces of a positive electrode current collector which was an aluminum foil, and then drying was performed to obtain a film layer. Then, cold pressing and slitting were performed to obtain a positive electrode plate. The binder was PVDF having a weight average molecular weight of 0.7 million, which was purchased from Arkema France Limited Company.

### 3) Preparation of negative electrode plate

A negative electrode active material graphite with high compaction density, a carbon black conductive agent, a styrene-butadiene rubber (SBR) binder, a polymer prepared in Example 1, and a hydroxymethyl cellulose sodium (CMC-Na) thickener were dissolved in a solvent of deionized water in a weight ratio of 96.5: 0.5: 1: 1: 1, stirred at 1800 r/min and 25°C for 3 h and mixed evenly to prepare a negative electrode slurry. The negative electrode slurry was evenly coated on two surfaces of a negative electrode current collector which was a copper foil once or multiple times, and then drying, cold pressing, and slitting were performed to obtain a negative electrode plate with the compaction density of 1.75 g/cm³.

### 4) Separator

A polypropylene film was used as a separator.

### 5) Preparation of electrolyte solution

In a glove box in an argon atmosphere (H₂O<0.1 ppm, O₂<0.1 ppm), organic solvents ethylene carbonate (EC) and ethyl methyl carbonate (EMC) were mixed evenly in a volume ratio of 3/7, and an LiPF₆ lithium salt was dissolved in the organic solvents and stirred evenly to prepare a 1 M LiPF₆ EC/EMC solution, thereby obtaining an electrolyte solution.

### 6) Preparation of battery

The positive electrode plate, the separator, and the negative electrode plate were laminated sequentially, where the separator was located between the positive electrode plate and the negative electrode plate for separation, and then, a bare battery cell was obtained by winding. The bare battery cell was welded with tabs, filled into an aluminum shell, and baked at 80°C to remove water. Then, the electrolyte solution was immediately injected, and an opening was sealed to obtain an uncharged battery. The uncharged battery was then subjected to standing, hot and cold pressing, formation, shaping, capacity test, and other working procedures in sequence to obtain a lithium-ion battery product of Example 26.

The preparation method of batteries in Examples 27 to 28 was similar to the preparation method of the battery in Example 26, except that the mole proportions of hydroxyethyl acrylate and 4-hydroxybutyl acrylate were adjusted. Specific parameters are shown in Table 3.

### Example 29

### 1) Preparation of polymer

The hydroxyethyl acrylate, 4-hydroxybutyl acrylate, acrylic acid, and acrylonitrile were added to a three-neck flask equipped with a reflux condenser and a stirrer in a mole ratio of 20: 20: 40: 20, deionized water and an ammonium persulfate initiator accounting for 0.05% of the total mass of the monomers were added; under a nitrogen atmosphere and at a constant temperature of 80°C, the reaction was performed at a rotation speed of 500 rpm for 8 h; and after the reaction, an acrylic acid-acrylonitrile-hydroxyethyl acrylate-hydroxybutyl acrylate copolymer was obtained. The weight average molecular weight of the copolymer was 0.8 million.

### 2) Preparation of positive electrode plate

A positive electrode active material LiNi_{0.6}Co_{0.2}Mn_{0.2}O₂(NCM622), a carbon black conductive agent, and a polyvinylidene fluoride (PVDF) binder were added to N-methylpyrrolidone in a weight ratio of 92:4:4, and stirred and mixed evenly to obtain a positive electrode slurry. The positive electrode slurry was evenly coated on two surfaces of a positive electrode current collector which was an aluminum foil, and then drying was performed to obtain a film layer. Then, cold pressing and slitting were performed to obtain a positive electrode plate. The binder was PVDF having a weight average molecular weight of 0.7 million, which was purchased from Arkema France Limited Company.

### 3) Preparation of negative electrode plate

A negative electrode active material common graphite, a silicon-carbon material, a carbon black conductive agent, a styrene-butadiene rubber (SBR) binder, a polymer prepared in Example 1, and a hydroxymethyl cellulose sodium (CMC-Na) thickener were dissolved in a solvent of deionized water in a weight ratio of 66.5: 30: 0.5: 1: 1: 1, stirred at 1800 r/min and 25°C for 3 h and mixed evenly to prepare a negative electrode slurry. The negative electrode slurry was evenly coated on two surfaces of a negative electrode current collector which was a copper foil once or multiple times, and then drying, cold pressing, and slitting were performed to obtain a negative electrode plate with the compaction density of 1.50 g/cm³.

### 4) Separator

A polypropylene film was used as a separator.

### 5) Preparation of electrolyte solution

In a glove box in an argon atmosphere (H₂O<0.1 ppm, O₂<0.1 ppm), organic solvents ethylene carbonate (EC) and ethyl methyl carbonate (EMC) were mixed evenly in a volume ratio of 3/7, and an LiPF₆ lithium salt was dissolved in the organic solvents and stirred evenly to prepare a 1 M LiPF₆ EC/EMC solution, thereby obtaining an electrolyte solution.

### 6) Preparation of battery

The positive electrode plate, the separator, and the negative electrode plate were laminated sequentially, where the separator was located between the positive electrode plate and the negative electrode plate for separation, and then, a bare battery cell was obtained by winding. The bare battery cell was welded with tabs, filled into an aluminum shell, and baked at 80°C to remove water. Then, the electrolyte solution was immediately injected, and an opening was sealed to obtain an uncharged battery. The uncharged battery was then subjected to standing, hot and cold pressing, formation, shaping, capacity test, and other working procedures in sequence to obtain a lithium-ion battery product of Example 29.

The preparation method of batteries in Examples 30 to 31 was similar to the preparation method of the battery in Example 30, except that the mole proportions of hydroxyethyl acrylate and 4-hydroxybutyl acrylate were adjusted. Specific parameters are shown in Table 3.

The preparation method of a battery in Comparative Example 1 was similar to the preparation method of the battery in Example 1. A binder used for the negative electrode plate was a polyacrylic acid binder with a weight average molecular weight of 0.8 million, which was purchased from LA133 of Yindile Limited Company. Specific parameters are shown in Table 1.

The preparation method of a battery in Comparative Example 2 was similar to the preparation method of the battery in Example 1, but polymerization monomers were only acrylic acid, acrylonitrile, and acrylamide monomers. Specific parameters are shown in Table 1.

The preparation method of a battery in Comparative Example 3 was similar to the preparation method of the battery in Example 26. A binder used for the negative electrode plate was a polyacrylic acid binder with a weight average molecular weight of 0.8 million, which was purchased from LA133 of Yindile Limited Company. Specific parameters are shown in Table 3.

The preparation method of a battery in Comparative Example 4 was similar to the preparation method of the battery in Example 26, but polymerization monomers were only acrylic acid, acrylonitrile, and acrylamide monomers. Specific parameters are shown in Table 3.

The preparation method of a battery in Comparative Example 5 was similar to the preparation method of the battery in Example 29. A binder used for the negative electrode plate was a polyacrylic acid binder with a weight average molecular weight of 0.8 million, which was purchased from LA133 of Yindile Limited Company. Specific parameters are shown in Table 3.

The preparation method of a battery in Comparative Example 6 was similar to the preparation method of the battery in Example 29, but polymerization monomers were only acrylic acid, acrylonitrile, and acrylamide monomers. Specific parameters are shown in Table 3.

### II. Test method

### 1. Test of properties of polymer

### 1) Test of glass transition temperature

A differential scanning calorimeter (model Q1000) from the TA Company was used for testing the glass transition temperature. 6 to 9 g of polymer sample was taken, was heated from room temperature to 200°C at a heating rate of 10°C/min, and then was kept at 200°C for 3 h to eliminate a heat history. After the temperature was reduced, the temperature was increased again from room temperature to 200°C at a heating rate of 10°C/min. A differential scanning calorimetry curve obtained through this scanning was analyzed to determine the glass transition temperature of the polymer, where the unit was °C.

### 2) Test of weight average molecular weight

A Waters 2695 Isocratic HPLC type gel chromatograph (differential refraction detector 2141) was used. A polystyrene solution sample with a mass fraction of 3.0% was used as a reference, and a matched chromatographic column was selected (oily: Styragel HT5DMF7.8*300 mm+Styragel HT4). A 3.0% polymer gel solution was prepared by using a purified N-methylpyrrolidone (NMP) solvent, and the prepared solution was allowed to stand for one day for later use. During testing, first, a syringe was used for sucking tetrahydrofuran, washing was performed, and the process was repeated several times. Then, 5 ml of experimental solution was sucked, air in the syringe was removed, and a needle tip was wiped dry. Finally, the sample solution was slowly injected into a sampling port. After the displayed number was stable, data was obtained, and the weight average molecular weight was read.

### 3) Viscosity of aqueous solution having solid content of 6wt%

24 g of polymer and 376 g of water were respectively weighted by using a 500 ml beaker to prepare an aqueous solution having a solid content of 6%, and the solution was dispersed by means of stirring by using a LICHEN high-speed grinder, where the rotation speed was 800 r/min, and the stirring time was 120 min; and then, ultrasonic shaking was performed for 30 min to remove air bubbles. An NDJ-5S rotary viscometer from LICHEN Technology was used, a No.64 rotor was selected and inserted into the aqueous solution crossing a scale line, the viscosity was tested at 12 r/min, and the viscosity data was read after 6 min.

### 2. Performance test of negative electrode plate

### 1) Test for determining whether edge cracking occurs during rolling

The electrode plate coated with the slurry was placed on a rolling press, rolling was performed after the thickness of a roll gap and a rolling pressure were adjusted to appropriate values, and whether the film layer of the electrode plate and the current collector were cracked at a junction was observed. If no cracking was observed, it was determined that there was no edge cracking; and if cracking was observed, it was determined that edge cracking occurred.

### 2) 48 h rebound rate of electrode plate after rolling.

The thickness of the negative electrode plate was tested by a vernier caliper. An initial thickness D0 of the negative electrode plate after rolling was used as a reference. The thickness of the negative electrode plate after being allowed to stand for 48 h after rolling was D1, and the 48 h rebound rate after rolling of the electrode plate was [(D1-D0)/D0]×100%.

### 3) Warping height

The negative electrode slurry was coated on the negative electrode current collector, and baked at 100°C for 1 min, so as to remove most of water. Then, the negative electrode current collector was cut into 10 negative electrode plates having a size of 4 cm × 4 cm. Then, the cut negative electrode plates were placed on a heating plate whose temperature was 120°C, and were kept for 1 min. Heights by which four corners of each negative electrode plate were tilted to the plane of the heating plate were measured by using a graduated scale, and were respectively denoted as h1, h2, h3, and h4. An average value of h1, h2, h3, and h4 corresponding to each negative electrode plate was calculated, and was denoted as H. The average values H corresponding to the 10 negative electrode plates were further averaged to serve as the warping height of the negative electrode plate.

### 4) Test of number of times of bending

The negative electrode plate after cold pressing was cut into a test sample with a size of 20*100 mm². After the test sample was folded in a forward direction, the test sample was flattened by using a 2 kg pressing roll, and the test sample was expanded to check whether the crease was transparent to light. If the crease was not transparent to light, the test sample was folded in a reverse direction, the test sample was flattened by using the 2 kg pressing roll, and the crease was checked against the light again. This process was repeated until the crease was transparent to light, and the number of times of folding was recorded. The test was repeated three times, and an average value was taken as the number of times of bending of the electrode plate.

### 5) Test for determining whether a corner was released

After the capacity test of the battery cell was completed, the battery cell was disassembled in a fully-charged state, and whether there are phenomena of film layer shedding and falling off at a convex corner of the negative electrode plate was observed. If only the phenomenon of falling off occurred, it was marked as level 1; if the phenomenon of release occurred, it was marked as level 2; and if the phenomena of peeling and bubbling occurred, it was marked as level 3.

### 6) Test of bonding force of electrode plate

Referring to the national standard "Experimental Method for 180° Peel Strength of Adhesive", a bonding force testing process was as follows:

A sample having a width of 30 mm and a length of 100 to 160 mm was cut using a knife, and a special double-faced adhesive tape was pasted to a steel plate, where the adhesive tape had a width of 20 mm and a length of 90 to 150 mm. The foregoing cut electrode plate sample was pasted to the double-faced adhesive tape with a test surface facing downward, and then was rolled by using a pressing roll along a same direction for three times.

A paper tape of which a width was the same as that of the electrode plate and a length was greater than the length of the sample by 80 to 200 mm was inserted below the electrode plate, and was fixed by using a crepe adhesive.

A power source of a SAStest tensile machine (sensitivity was 1 N) was turned on, an indicator light was turned on, a stop block was adjusted to an appropriate position, and one end of the steel plate that was not pasted with an electrode plate was fixed by using a lower clamp. The paper tape was folded upward and was fixed by using an upper clamp, and the position of the upper clamp was adjusted by using an "uplink" button and a "downlink" button on a manual controller attached to the tensile machine. Then, a test was performed, and a value was read.

### 3. Performance test of battery

### 1). Test of capacity retention rate of battery

At 25°C, the battery was charged at a constant current of 1/3 C to 4.25 V, then charged at a constant voltage of 4.25 V to a current of 0.05 C, left for 5 min, and then discharged at 1/3 C to 2.8 V, and an obtained capacity was recorded as an initial capacity C0. The foregoing steps were repeated for the same battery, and a discharging capacity Cn of the battery after the nth cycle was recorded at the same time. Therefore, after each cycle, a battery capacity retention rate was Pn=Cn/C0*100%, and a battery cycle capacity retention rate after 500 cycles of the battery was recorded.

### III. Analysis of test results of Examples and Comparative Examples

In accordance with the foregoing methods, the batteries of Examples and Comparative Examples were respectively prepared, and various performance parameters were measured. The results are shown in the following tables.

**Table 1**

| Serial Number | Polymer | Monomer shown in Formula I | | Monomer shown in Formula II | | Monomer shown in Formula III | | Monomer shown in Formula IV | |
|---|---|---|---|---|---|---|---|---|---|
| | | Name | Mole proportion | Name | Mole proportion | Name | Mole proportion | Name | Mole proportion |
| Example 1 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 2 | Acrylic acid-acrylonitrile-acrylamide-hydroxyethyl acrylate copolymer | Hydroxyethyl acrylate | 20% | Acrylic acid | 45% | Acrylonitrile | 25% | Acrylamide | 10% |
| Example 3 | Acrylic acid-acrylonitrile-acrylamide-hydroxyethyl acrylate copolymer | Hydroxyethyl acrylate | 5% | Acrylic acid | 60% | Acrylonitrile | 25% | Acrylamide | 10% |
| Example 4 | Acrylic acid-acrylonitrile-acrylamide-hydroxyethyl acrylate copolymer | Hydroxyethyl acrylate | 30% | Acrylic acid | 35% | Acrylonitrile | 25% | Acrylamide | 10% |
| Example 5 | Acrylic acid-acrylonitrile-acrylamide-hydroxyethyl acrylate copolymer | Hydroxyethyl acrylate | 50% | Acrylic acid | 15% | Acrylonitrile | 25% | Acrylamide | 10% |
| Example 6 | Acrylic acid-acrylonitrile-acrylamide-hydroxyethyl acrylate copolymer | Hydroxyethyl acrylate | 35% | Acrylic acid | 50% | Acrylonitrile | 10% | Acrylamide | 5% |
| Example 7 | Acrylic acid-acrylonitrile-acrylamide-hydroxyethyl acrylate copolymer | Hydroxyethyl acrylate | 35% | Acrylic acid | 40% | Acrylonitrile | 15% | Acrylamide | 10% |
| Example 8 | Acrylic acid-acrylonitrile-acrylamide-hydroxyethyl acrylate copolymer | Hydroxyethyl acrylate | 35% | Acrylic acid | 35% | Acrylonitrile | 20% | Acrylamide | 10% |
| Example 9 | Acrylic acid-acrylonitrile-acrylamide-hydroxyethyl acrylate copolymer | Hydroxyethyl acrylate | 35% | Acrylic acid | 10% | Acrylonitrile | 45% | Acrylamide | 10% |
| Example 10 | Acrylic acid-acrylonitrile-hydroxyethyl acrylate copolymer | Hydroxyethyl acrylate | 35% | Acrylic acid | 40% | Acrylonitrile | 25% | Acrylamide | 0% |
| Example 11 | Acrylic acid-acrylonitrile-acrylamide-hydroxyethyl acrylate copolymer | Hydroxyethyl acrylate | 35% | Acrylic acid | 35% | Acrylonitrile | 25% | Acrylamide | 5% |
| Example 12 | Acrylic acid-acrylonitrile-acrylamide-hydroxyethyl acrylate copolymer | Hydroxyethyl acrylate | 35% | Acrylic acid | 20% | Acrylonitrile | 25% | Acrylamide | 20% |
| Example 13 | Acrylic acid-acrylonitrile-acrylamide-hydroxyethyl acrylate copolymer | Hydroxyethyl acrylate | 35% | Acrylic acid | 10% | Acrylonitrile | 25% | Acrylamide | 30% |
| Example 14 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 15 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 16 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 17 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 18 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 19 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 20 | Acrylic acid-acrylonitrile-acrylamide-hydroxyethyl acrylate copolymer | Hydroxyethyl acrylate | 35% | Acrylic acid | 30% | Acrylonitrile | 25% | Acrylamide | 10% |
| Example 21 | Acrylic acid-acrylonitrile-acrylamide-hydroxybutyl acrylate copolymer | 4-hydroxybutyl acrylate | 35% | Acrylic acid | 30% | Acrylonitrile | 25% | Acrylamide | 10% |
| Example 22 | Acrylic acid-acrylonitrile-acrylamide-hydroxypropyl acrylate copolymer | Hydroxypropyl acrylate | 25% | Acrylic acid | 40% | Acrylonitrile | 25% | Acrylamide | 10% |
| Example 23 | Methacrylic acid-acrylonitrile-acrylamide-hydroxyethyl acrylate copolymer | Hydroxyethyl acrylate | 35% | Methacrylic acid | 30% | Acrylonitrile | 25% | Acrylamide | 10% |
| Example 24 | Acrylic acid-methacrylonitrile-acrylamide-hydroxyethyl acrylate copolymer | Hydroxyethyl acrylate | 35% | Acrylic acid | 30% | Methacrylonitrile | 25% | Acrylamide | 10% |
| Example 25 | Acrylic acid-acrylonitrile-methacrylamide-hydroxyethyl acrylate copolymer | Hydroxyethyl acrylate | 35% | Acrylic acid | 30% | Acrylonitrile | 25% | Methacrylamide | 10% |
| Comparative Example 1 | Commercially available acrylic acid binder | / | | | | | | | |
| Comparative Example 2 | Acrylic acid-acrylonitrile-acrylamide copolymer | / | / | Acrylic acid | 55% | Acrylonitrile | 35% | Acrylamide | 10% |

**Table 2**

| Serial number | Polymer | | | Negative electrode plate | | | | | Battery performance |
|---|---|---|---|---|---|---|---|---|---|
| | Weight average molecular weight | Glass transition temperature (°C) | Viscosity of aqueous solution having solid content of 6wt% (MPa•s) | Mass fraction of polymer (%) | Whether edge cracking occurs during rolling | 48 h rebound rate of electrode plate after rolling (%) | Warping height (mm) | Bonding force (N/m) | Capacity retention rate after 500 cycles (%) |
| Example 1 | 0.8 million | 67.30 | 12500 | 1 | No | 4.39% | 10.5 | 12.93 | 95.56 |
| Example 2 | 0.8 million | 85.45 | 15550 | 1 | No | 4.34% | 15.3 | 13.89 | 94.45 |
| Example 3 | 0.8 million | 103.60 | 18250 | 1 | Yes | 3.25% | 18.1 | 14.76 | 94.32 |
| Example 4 | 0.8 million | 73.35 | 12500 | 1 | No | 4.87% | 12.7 | 13.43 | 95.31 |
| Example 5 | 0.8 million | 49.15 | 11050 | 1 | No | 7.15% | 4.6 | 10.78 | 93.79 |
| Example 6 | 0.8 million | 65.70 | 12000 | 1 | No | 5.36% | 8.5 | 11.05 | 94.47 |
| Example 7 | 0.8 million | 68.20 | 11550 | 1 | No | 5.14% | 9.6 | 11.82 | 94.95 |
| Example 8 | 0.8 million | 67.75 | 12500 | 1 | No | 4.48% | 9.3 | 12.41 | 95.36 |
| Example 9 | 0.8 million | 65.50 | 14600 | 1 | No | 3.55% | 8.1 | 15.65 | 95.24 |
| Example 10 | 0.8 million | 61.40 | 8900 | 1 | No | 4.65% | 7.2 | 13.74 | 94.99 |
| Example 11 | 0.8 million | 64.35 | 10550 | 1 | No | 4.57% | 7.6 | 13.46 | 95.14 |
| Example 12 | 0.8 million | 73.20 | 15550 | 1 | No | 4.34% | 11.9 | 13.17 | 95.04 |
| Example 13 | 0.8 million | 79.10 | 19550 | 1 | No | 4.15% | 13.7 | 12.89 | 95.01 |
| Example 14 | 0.8 million | 67.30 | 12500 | 0.5 | No | 4.28% | 8.4 | 12.65 | 95.34 |
| Example 15 | 0.8 million | 67.30 | 12500 | 2 | No | 4.46% | 12.4 | 12.47 | 95.67 |
| Example 16 | 0.8 million | 67.30 | 12500 | 3 | No | 4.55% | 14.6 | 13.65 | 95.76 |
| Example 17 | 0.5 million | 67.10 | 11200 | 1 | No | 4.46% | 10.2 | 12.46 | 95.13 |
| Example 18 | 0.9 million | 67.40 | 13500 | 1 | No | 4.35% | 10.9 | 13.05 | 95.55 |
| Example 19 | 1.5 million | 67.80 | 16850 | 1 | No | 4.23% | 11.6 | 14.27 | 95.73 |
| Example 20 | 2 million | 68.50 | 20350 | 1 | No | 4.12% | 12.0 | 15.05 | 95.34 |
| Example 21 | 0.8 million | 53.30 | 12600 | 1 | No | 7.54% | 5.6 | 11.54 | 94.54 |
| Example 22 | 0.8 million | 63.90 | 14250 | 1 | No | 6.48% | 6.3 | 12.04 | 94.52 |
| Example 23 | 0.8 million | 91.00 | 14650 | 1 | Yes | 4.19% | 15.9 | 12.84 | 95.19 |
| Example 24 | 0.8 million | 75.55 | 14900 | 1 | No | 3.95% | 13.5 | 12.78 | 95.2 |
| Example 25 | 0.8 million | 65.80 | 16400 | 1 | No | 4.27% | 8.7 | 12.63 | 94.78 |
| Comparative Example 1 | 0.8 million | 115.00 | 17500 | 1 | Yes | 2.34% | 35.2 | 12.45 | 94.87 |
| Comparative Example 2 | 0.8 million | 107.25 | 16500 | 1 | Yes | 2.53% | 26.2 | 16.43 | 95.32 |

**Table 3**

| Serial number | PAA binder | Monomer shown in Formula 1 | | Monomer shown in Formula 11 | | Monomer shown in Formula III | | Monomer shown in Formula IV | | Polymer | | | Negative electrode plate | | | | Battery performance |
|---|---|---|---|---|---|---|---|---|---|---|---|---|---|---|---|---|---|
| | | Name | Mole proportion | Name | Mole proportion | Name | Mole proportion | Name | Mole proportion | Weight average molecular weight | Glass transition temperature (°C) | Viscosity of aqueous solution having solid content of 6wt% (MPa•s) | Mass fraction of polymer (%) | Warping height (mm) | Number of times of bending | 48 h rebound rate of electrode plate after rolling | Capacity retention rate after 500 cycles (%) |
| Example 26 | Acrylic acid-acrylonitrile-acrylamide-hydroxyethyl acrylate-hydroxybutyl acrylate copolymer | HEA:4-HBA=1:3 (mole ratio) | 20% | Acrylic acid | 35% | Acrylonitrile | 40% | Acrylamide | 5% | 0.8 million | 75.15 | 13750 | 1 | 12.9 | 4.33 | 4.13% | 95.78 |
| Example 27 | Acrylic acid-acrylonitrile-acrylamide-hydroxyethyl acrylate copolymer | HEA | 20% | Acrylic acid | 35% | Acrylonitrile | 40% | Acrylamide | 5% | 0.8 million | 85.45 | 15550 | 1 | 15.2 | 4 | 3.89% | 95.56 |
| Example 28 | Acrylic acid-acrylonitrile-acrylamide-hydroxybutyl acrylate copolymer | 4-HBA | 20% | Acrylic acid | 35% | Acrylonitrile | 40% | Acrylamide | 5% | 0.8 million | 73.15 | 14300 | 1 | 12.3 | 4.67 | 4.22% | 95.63 |
| Comparative Example 3 | Commercially available acrylic acid binder | / | | | | | | | | 0.8 million | 115.00 | 17500 | 1 | 35.8 | 3 | 2.36% | 95.27 |
| Comparative Example 4 | Acrylic acid-acrylonitrile-acrylamide copolymer | / | / | Acrylic acid | 55% | Acrylonitrile | 35% | Acrylamide | 10% | 0.8 million | 107.25 | 16500 | 1 | 26.6 | 3.33 | 2.47% | 95.32 |

**Table 4**

| Serial number | PAA binder | Monomer shown in Formula 1 | | Monomer shown in Formula 11 | | Monomer shown in Formula III | | Monomer shown in Formula IV | | Polymer | | | Negative electrode plate | | | | Battery performance |
|---|---|---|---|---|---|---|---|---|---|---|---|---|---|---|---|---|---|
| | | Name | Mole proportion | Name | Mole proportion | Name | Mole proportion | Name | Mole proportion | Weight average molecular weight | Glass transition temperature (°C) | Viscosity of aqueous solution having solid content of 6wt% (MPa•s) | Mass fraction of polymer (%) | Warping height (mm) | Corner release condition | 48 h rebound rate of electrode plate after rolling | Capacity retention rate after 500 cycles (%) |
| Example 29 | Acrylic acid-acrylonitrile-hydroxyethyl acrylate-hydroxybutyl acrylate copolymer | HEA:4-HBA=1:1 (mole ratio) | 40% | Acrylic acid | 40% | Acrylonitrile | 20% | Acrylamide | / | 0.8 million | 62.35 | 14700 | 1 | 6.8 | No | 5.34% | 92.87 |
| Example 30 | Acrylic acid-acrylonitrile-hydroxyethyl acrylate copolymer | HEA | 40% | Acrylic acid | 40% | Acrylonitrile | 20% | | / | 0.8 million | 70.35 | 16700 | 1 | 8.9 | Level 1 | 4.62% | 92.32 |
| Example 31 | Acrylic acid-acrylonitrile-hydroxybutyl acrylate copolymer | 4-HBA | 40% | Acrylic acid | 40% | Acrylonitrile | 20% | Acrylamide | / | 0.8 million | 54.35 | 13800 | 1 | 5.3 | No | 5.91% | 93.17 |
| Comparative Example 5 | Commercially available acrylic acid binder | / | | | | | | | | 0.8 million | 115.00 | 17500 | 1 | 34.3 | Level 3 | 2.63% | 91.52 |
| Comparative Example 6 | Acrylic acid-acrylonitrile-acrylamide copolymer | / | / | Acrylic acid | 40% | Acrylonitrile | 35% | Acrylamide | 25% | 0.8 million | 107.25 | 16500 | 1 | 23.9 | Level 3 | 2.85% | 91.63 |

The glass transition temperature of hydroxyethyl acrylate is -15°C, the glass transition temperature of hydroxypropyl acrylate is -30°C, and the glass transition temperature of 4-hydroxybutyl acrylate is -55°C. It can be seen from Tables 1 to 4 that the polymers in Examples 1 to 31 all contain a structural unit derived from an unsaturated carboxylic acid monomer, a structural unit derived from an unsaturated cyano monomer, and a structural unit derived from a flexible monomer. The glass transition temperature of the flexible monomer is -60°C to 0°C, and optionally -55°C to -15°C.

It can be seen from Table 1 and Table 2 that when the negative electrode plate includes the foregoing polymer, the cohesive force of the electrode plate binder is relatively low, so that the negative electrode plate has a low warping height and good forming quality.

It can be seen from Table 1 that when the glass transition temperature of the polymer is 40°C to 105°C, the negative electrode plate has a low warping height and good forming quality. When the glass transition temperature of the negative electrode polymer is 40°C to 90°C, edge racking of the negative electrode plate cannot occur during rolling, and thus, the production efficiency and quality are greatly improved.

It can be seen from Examples 1 to 5 in Table 1 that when the mole proportion of the structural unit derived from the hydroxyethyl acrylate is 5% to 50% based on the total mole number of the structural units in the polymer, the warping height of the electrode plate is small, and the electrode plate has excellent forming stability. When the mole proportion is 20% to 35%, the negative electrode plate does not have a phenomenon of edge cracking during rolling, thereby improving the production efficiency. In addition, a high bonding force of the electrode plate and a low rebound rate of the electrode plate can be maintained, thereby comprehensively improving the cycle stability of the battery.

It can be seen from Example 1 and Examples 6 to 13 in Table 1 that when the mole proportion of the structural unit derived from the unsaturated cyano monomer is 10% to 45% based on the total mole number of the structural units in the polymer, the electrode plate has good bonding performance, and the battery has excellent cycle stability.

It can be seen from Example 1 and Examples 10 to 13 in Table 1 that when the mole content of the structural unit derived from the unsaturated amide monomer is 0% to 30% based on the total mole number of the structural units in the polymer, the negative electrode slurry has a suitable viscosity, which is conducive to the coating and forming of the slurry, and improving the quality of the negative electrode plate.

It can be seen from Example 1 and Examples 14 to 16 that when the mass content of the polymer is 0.5% to 3% based on the total mass of the negative electrode film layer, the negative electrode plate has low warping height and good bonding performance, and the battery has excellent cycle stability.

It can be seen from Example 1 and Examples 17 to 20 that when the weight average molecular weight of the polymer is 0.5 million to 2 million, the negative electrode plate has low warping height and good bonding performance, and the battery has excellent cycle stability.

It can be seen from Examples and Comparative Examples in Table 3 that the polymer provided in the present application is also applicable to a graphite negative electrode plate system with high compaction density to reduce the warping height of the electrode plate.

When the polymer includes two flexible monomers, namely, hydroxyethyl acrylate and hydroxybutyl acrylate, the polymer can improve the flexibility of the negative electrode plate with high compaction density and increase the number of times of bending of the electrode plate while considering a high bonding force and a low rebound rate of the electrode plate, so as to meet the use requirements of the negative electrode system with high compaction density, thereby improving the cycle stability of the battery by means of comprehensive effects.

It can be seen from Examples and Comparative Examples in Table 3 that the polymer provided in the present application is also applicable to a silicon negative electrode system to reduce the warping height of the electrode plate.

When the polymer includes two flexible monomers, namely, hydroxyethyl acrylate and hydroxybutyl acrylate, the polymer can reduce occurrence of a corner release phenomenon of the silicon negative electrode while considering a high bonding force and a low rebound rate, so as to meet the use requirements of the silicon negative electrode system, thereby improving the cycle stability of the battery by means of comprehensive effects.

It should be noted that the present application is not limited to the above embodiments. The above-described embodiments are merely exemplary, and embodiments having substantially the same technical idea and the same effects within the scope of the technical solution of the present application are all included in the technical scope of the present application. In addition, other embodiments constructed by applying various modifications conceivable to those skilled in the art to the embodiments and combining some of the constituent elements of the embodiments without departing from the scope of the essence of the present application are also included in the scope of the present application.

## Claims

1. A polymer, containing a structural unit derived from an unsaturated carboxylic acid monomer, a structural unit derived from an unsaturated cyano monomer, and a structural unit derived from a flexible monomer, wherein a glass transition temperature of the flexible monomer is -60°C to 0°C, and optionally -55°C to -15°C.

2. The polymer according to claim 1, wherein the flexible monomer comprises a structure shown in Formula I: 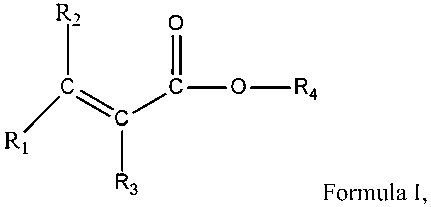 wherein R₁, R₂, and R₃ each independently comprises hydrogen or substituted or unsubstituted C₁₋₅ alkyl, and R₄ comprises one or more of C₁₋₅ hydroxyalkyl, C₁₋₅ alkyl, and C₁₋₅ alkoxy.

3. The polymer according to claim 1 or 2, wherein the unsaturated carboxylic acid monomer comprises a structure shown in Formula II, 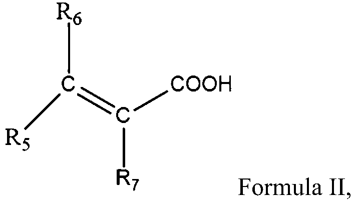 and
the unsaturated cyano monomer comprises a structure shown in Formula III, 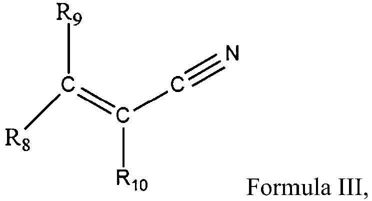
wherein R₅, R₆, R₇, R₈, R₉, and R₁₀ each independently comprises hydrogen or substituted or unsubstituted C₁₋₅ alkyl.

4. The polymer according to any one of claims 1 to 3, wherein the polymer further contains a structural unit derived from an unsaturated amide monomer, and the unsaturated amide monomer comprises a structure shown in Formula IV: 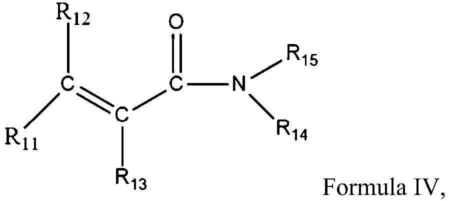 wherein R₁₁, R₁₂, R₁₃, R₁₄, and R₁₅ each independently comprises hydrogen or substituted or unsubstituted C₁₋₅ alkyl.

5. The polymer according to any one of claims 1 to 4, wherein the flexible monomer comprises one or more of hydroxyethyl acrylate, hydroxypropyl acrylate, 4-hydroxybutyl acrylate, ethyl acrylate, and n-butyl acrylate.

6. The polymer according to any one of claims 1 to 4, wherein the flexible monomer comprises at least two of hydroxyethyl acrylate, hydroxypropyl acrylate, 4-hydroxybutyl acrylate, ethyl acrylate, and n-butyl acrylate.

7. The polymer according to any one of claims 4 to 6, wherein the unsaturated carboxylic acid monomer comprises one or more of acrylic acid, methacrylic acid, ethylacrylic acid, and butenoic acid; the unsaturated cyano monomer comprises one or more of acrylonitrile, butenenitrile, methacrylonitrile, and ethylacrylonitrile; and the unsaturated amide monomer comprises one or more of acrylamide, methylacrylamide, N,N-dimethylacrylamide, and N-methylacrylamide.

8. The polymer according to any one of claims 1 to 7, wherein based on a total mole number of the structural units in the polymer, a mole proportion of the structural unit derived from the flexible monomer is 5% to 50%, and optionally 20% to 35%.

9. The polymer according to any one of claims 4 to 8, wherein based on the total mole number of the structural units in the polymer, a mole proportion of the structural unit derived from the unsaturated carboxylic acid monomer is 10% to 60%, and optionally 30% to 50%, and/or
a mole proportion of the structural unit derived from the unsaturated cyano monomer is 10% to 60%, and optionally 15% to 45%, and/or
a mole proportion of the structural unit derived from the unsaturated amide monomer is 0% to 30%, and optionally 5% to 20%.

10. The polymer according to any one of claims 1 to 9, wherein a glass transition temperature of the polymer is 40°C to 105°C, and optionally 40°C to 90°C.

11. The polymer according to any one of claims 1 to 10, wherein a weight average molecular weight of the polymer is 0.5 million to 2 million, and optionally 0.8 million to 1.5 million.

12. The polymer according to any one of claims 1 to 11, wherein a viscosity of an aqueous solution having a solid content of 6wt% and prepared by dissolution of the polymer in deionized water is 8000 mPa·s to 30000 mPa·s, and optionally 10000 mPa·s to 20000 mPa·s.

13. The polymer according to any one of claims 1 to 12, wherein the polymer comprises at least one of an acrylic acid-acrylonitrile-acrylamide-hydroxyethyl acrylate copolymer, an acrylic acid-acrylonitrile-hydroxyethyl acrylate copolymer, a methacrylic acid-acrylonitrile-acrylamide-hydroxyethyl acrylate copolymer, an acrylic acid-methacrylonitrile-acrylamide-hydroxyethyl acrylate copolymer, an acrylic acid-acrylonitrile-methacrylamide-hydroxyethyl acrylate copolymer, an acrylic acid-acrylonitrile-acrylamide-hydroxybutyl acrylate copolymer, an acrylic acid-acrylonitrile-acrylamide-hydroxypropyl acrylate copolymer, an acrylic acid-acrylonitrile-acrylamide-hydroxyethyl acrylate-hydroxybutyl acrylate copolymer, and an acrylic acid-acrylonitrile-hydroxyethyl acrylate-hydroxybutyl acrylate copolymer.

14. A preparation method of a polymer, comprising the following steps:
under a polymerizable condition, polymerizing a raw material comprising a flexible monomer, an unsaturated carboxylic acid monomer, and an unsaturated cyano monomer to prepare a polymer, wherein a glass transition temperature of the flexible monomer is -60°C to 0°C, and optionally -55°C to -15°C.

15. The preparation method according to claim 14, wherein the preparation method specifically comprises:
polymerizing an initiator, the flexible monomer shown in Formula I, the unsaturated carboxylic acid monomer shown in Formula II, the unsaturated cyano monomer shown in Formula III, and an unsaturated amide monomer shown in Formula IV in an aqueous solvent; 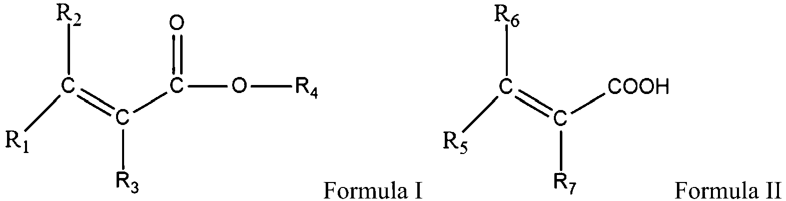 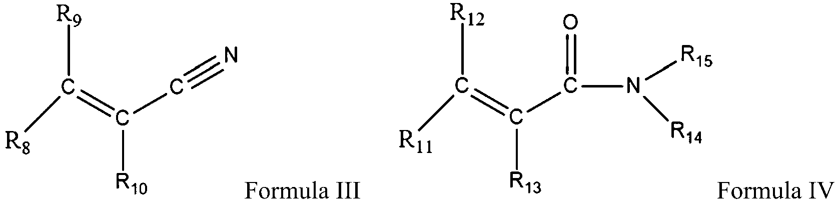
wherein R₁, R₂, R₃, R₅, R₆, R₇, R₈, R₉, R₁₀, R₁₁, R₁₂, R₁₃, R₁₄, and R₁₅ each independently comprises hydrogen or substituted or unsubstituted C₁₋₅ alkyl, and R₄ comprises one or more of C₁₋₅ hydroxyalkyl, C₁₋₅ alkyl, and C₁₋₅ alkoxy.

16. The preparation method according to claim 15, wherein the initiator comprises an inorganic peroxide initiator, and the inorganic peroxide initiator comprises any one of ammonium persulfate, potassium persulfate, and sodium persulfate.

17. The preparation method according to claim 15 or 16, wherein a mass of the initiator is 0.01% to 0.1%, and optionally 0.03% to 0.08%, of a total mass of the flexible monomer, the unsaturated carboxylic acid monomer, the unsaturated cyano monomer, and the unsaturated amide monomer.

18. The preparation method according to any one of claims 14 to 17, wherein the polymerization satisfies at least one of the following conditions:
(1) a reaction environment of the polymerization is a non-water soluble gas atmosphere;
(2) a reaction temperature of the polymerization is 60°C to 100°C;
(3) a stirring speed of the polymerization is 200 rpm to 800 rpm; and
(4) a reaction time of the polymerization is 8 h to 12 h.

19. The preparation method according to claim 18, wherein the non-water soluble gas comprises one or more of nitrogen, oxygen, hydrogen, and methane.

20. A negative electrode plate, comprising a negative electrode film layer, wherein the negative electrode film layer comprises a binder, and the binder comprises the polymer according to any one of claims 1 to 13 or a polymer prepared by the preparation method according to any one of claims 14 to 19.

21. The negative electrode plate according to claim 20, wherein a mass proportion of the binder is 0.5% to 3%, and optionally 1% to 2%, based on a total mass of the negative electrode film layer.

22. The negative electrode plate according to claim 20 or 21, wherein a warping height of the negative electrode plate is 0 mm to 20 mm.

23. The negative electrode plate according to any one of claims 20 to 22, wherein the negative electrode plate comprises a negative electrode active material, and the negative electrode active material comprises one or more of artificial graphite, natural graphite, soft carbon, hard carbon, and a silicon-based material.

24. The negative electrode plate according to any one of claims 20 to 23, wherein a compaction density of the negative electrode plate is 1.45 g/cm³ to 1.95 g/cm³.

25. A secondary battery, comprising the negative electrode plate according to any one of claims 20 to 24.

26. A power consuming apparatus, comprising the secondary battery according to claim 25.
